# EUROPÄISCHE PATENTSCHRIFT

(11) **EP 3 868 005 B1**
(45) Veröffentlichungstag und Bekanntmachung des Hinweises auf die Patenterteilung: **01.06.2022**
(21) Anmeldenummer: 19817165.4
(22) Anmeldetag: 26.11.2019
(51) Int. Cl.: H02K 11/30, H02K 41/03, H02P 25/064

(54) **VORRICHTUNG ZUM ANTREIBEN VON WENIGSTENS EINEM MOVER AUF EINER ANTRIEBSFLÄCHE**
DEVICE FOR DRIVING AT LEAST ONE MOVER OVER A DRIVE AREA
DISPOSITIF POUR ENTRAÎNER AU MOINS UN ÉLÉMENT DE DÉPLACEMENT SUR UNE SURFACE D'ENTRAÎNEMENT

(30) Priorität: 26.11.2018 DE 102018129739
(43) Veröffentlichungstag der Anmeldung: 25.08.2021
(73) Patentinhaber: Beckhoff Automation GmbH, 33415 Verl (DE)
(72) Erfinder: LUTHE, Thomas, 33415 Verl (DE); WEBER, Tobias, 33332 Gütersloh (DE); NEUMANN, Klaus, 33330 Gütersloh (DE); WEDDEMANN, Alexander, 59558 Lippstadt (DE); PENNEKAMP, Hubertus, 33334 Gütersloh (DE); WIEDNER, Eva, 33161 Hövelhof (DE)
(74) Vertreter: Patentanwaltskanzlei WILHELM & BECK
(86) Internationale Anmeldenummer: PCT/EP2019/082518
(87) Internationale Veröffentlichungsnummer: WO 2020/109276

(56) Entgegenhaltungen:
- EP-A1- 3 095 739
- AMATO N M ET AL: "A randomized roadmap method for path and manipulation planning", ROBOTICS AND AUTOMATION, 1996. PROCEEDINGS., 1996 IEEE INTERNATIONAL C ONFERENCE ON MINNEAPOLIS, MN, USA 22-28 APRIL 1996, NEW YORK, NY, USA,IEEE, US, Bd. 1, 22. April 1996 (1996-04-22), Seiten 113-120, XP010162739, DOI: 10.1109/ROBOT.1996.503582 ISBN: 978-0-7803-2988-1
- ZHANG YUNFEI ET AL: "Probabilistic roadmap with self-learning for path planning of a mobile robot in a dynamic and unstructured environment", 2013 IEEE INTERNATIONAL CONFERENCE ON MECHATRONICS AND AUTOMATION, IEEE, 4. August 2013 (2013-08-04), Seiten 1074-1079, XP032494286, DOI: 10.1109/ICMA.2013.6618064 ISBN: 978-1-4673-5557-5 [gefunden am 2013-10-02]

## Beschreibung

Vorrichtung zum Antreiben von wenigstens einem Mover auf einer Antriebsfläche Die Erfindung betrifft eine Vorrichtung zum Antreiben von wenigstens einem Mover auf einer Antriebsfläche und ein Verfahren zum Ermitteln eines Fahrweges.

Planare Antriebssysteme können unter anderem in der Automatisierungstechnik, insbesondere der Fertigungstechnik, der Handhabungstechnik und der Verfahrenstechnik eingesetzt werden. Mittels planarer Antriebssysteme kann ein bewegliches Element, ein sogenannter Mover, einer Anlage einer Maschine in mindestens zwei linear unabhängigen Richtungen bewegt oder positioniert werden. Planare Antriebssysteme können einen permanenterregten elektromagnetischen Planarmotor mit einem planaren Stator und einem auf dem Stator in mindestens zwei Richtungen beweglichen Läufer, das heißt den Mover, umfassen.

Bei einem permanenterregten elektromagnetischen Planarmotor wird dadurch eine Antriebskraft auf den Mover ausgeübt, dass stromdurchflossene Leiter mit Antriebsmagneten einer Magnetanordnung magnetisch wechselwirken. Die Erfindung betrifft insbesondere Ausgestaltungen von planaren Antriebsvorrichtungen, bei denen die Antriebsmagneten eines elektrischen Planarmotors an dem Mover und die stromdurchflossenen Leiter des Planarmotors in einer ortsfest angeordneten Antriebsfläche angeordnet sind. Aus EP 3 095 739 A1 ist eine Vorrichtung zum Antreiben von wenigstens einem Mover auf einer Antriebsfläche mit den Merkmalen des Obergriffes des Anspruchs 1 und ein Verfahren zum Ermitteln eines Fahrweges des Movers mit den Merkmalen des Obergriffes des Anspruchs 8 bekannt. Aus AMATO N M ET AL: "A randomized roadmap method for path and manipulation planning", ROBOTICS AND AUTOMATION, 1996. PROCEEDINGS., 1996 IEEE INTERNATIONAL C ONFERENCE ON MINNEAPOLIS, MN, USA 22-28. APRIL 1996, NEWYORK, NY, USA,IEEE, US, Bd. 1, 22. April 1996 (1996-04-22), Seiten 113-120, und aus ZHANG YUNFEI ET AL: "Probabilistic roadmap with self-learning for path planning of a mobile robot in a dynamic and unstructured environment", 2013 IEEE INTERNATIONAL CONFERENCE ON MECHATRONICS AND AUTOMATION, IEEE, 4. August 2013 (2013-08-04), Seiten 1074-1079 sind Verfahren zum Bestimmen eines optimalen Moverpfades bzw. zum Steuern des Movers entsprechend des Pfades bekannt.

Die Aufgabe der Erfindung besteht darin, eine verbesserte Vorrichtung zum Antreiben eines Movers auf einer Antriebsfläche und ein verbessertes Verfahren zum Ermitteln eines Fahrweges des Movers bereitzustellen. Die Aufgabe der Erfindung wird durch die unabhängigen Patentansprüche gelöst.

Es wird eine Vorrichtung zum Antreiben von wenigstens einem Mover auf einer Antriebsfläche vorgeschlagen, wobei der Mover wenigstens einen zweiten Magnetfelderzeuger aufweist, wobei die Vorrichtung mehrere plattenförmige Sektoren aufweist, wobei die Sektoren Magnetfelderzeuger aufweisen, wobei die Sektoren die Antriebsfläche bilden, wobei die Sektoren mit einer Steuereinheit verbunden sind, wobei die Steuereinheit ausgebildet ist, um über eine entsprechende Steuerung einer Stromversorgung der Magnetfelderzeuger Magnetfelder in der Weise zu erzeugen, dass der Mover wenigstens in einer Richtung über die Antriebsfläche bewegbar sind, wobei wenigstens ein insbesondere seitens der Steuereinheit virtuell festgelegtes Pfadnetz auf der Antriebsfläche vorgesehen ist, wobei die Steuereinheit ausgebildet ist, um einen Fahrweg für den Mover auf dem Pfadnetz insbesondere nach vorgegebenen Randbedingungen zu ermitteln, wobei die Steuereinheit ausgebildet ist, um die Magnetfelderzeuger der Sektoren in der Weise mit Strom anzusteuern, dass der Mover entlang des ermittelten Fahrweges innerhalb des Pfadnetzes über die Antriebsfläche bewegbar ist. Durch die Verwendung von wenigstens einem Pfadnetz wird die Ermittlung des Fahrweges vereinfacht.

Unter einem Pfadnetz im Sinne der Erfindung ist die Gesamtheit der Pfade auf der Antriebsfläche zu verstehen.

Ein Pfad ist definiert durch eine eindimensionale Linie auf der Antriebsfläche entlang der ein Mover bewegt werden kann.

Ein Pfad kann geschlossen sein und/oder ein oder zwei offene Enden aufweisen und/oder ein oder zwei Anschlusspunkte zu anderen Pfaden besitzen. Ein geschlossener Pfad wird beispielsweise durch einen Kreis oder andere in sich geschlossene geometrische Formen gebildet.

Anschlusspunkte sind durch die Punkte definiert, an denen mindestens zwei Pfade aufeinandertreffen und ein Wechsel eines Movers von einem auf den anderen Pfad möglich ist. Ein offenes Ende eines Pfades ist beispielsweise bei einer Sackgasse gegeben, die an einem Ende des Pfades keinen Anschlusspunkt zu anderen Pfaden aufweist. Pfade ohne Anschlusspunkte sind entweder geschlossen oder weisen zwei offene Enden auf.

Ein Pfadnetz kann mehrere, voneinander getrennte Pfade und/oder voneinander getrennte, zusammenhängende Teile des Pfadnetzes aufweisen, und setzt sich somit aus Teilen des Pfadnetzes zusammen. Ein getrennter Pfad kann von einem Pfad gebildet werden, der entweder ein geschlossener Pfad ist oder zwei offene Enden aufweist und damit keine Anschlusspunkte aufweist. Ein zusammenhängender Teil des Pfadnetzes weist eine Summe von Pfaden auf, die über Anschlusspunkte miteinander verbunden sind.

Die Begriffe Pfadnetz und Pfad stellen Hilfsmittel für die Ermittlung eines Fahrweges dar, dabei handelt es sich um virtuelle Konstrukte, die keine physischen Verkörperungen haben.

Entlang der Pfade eines Pfadnetzes können Fahrwege der Mover ermittelt werden. Ein Fahrweg ist dabei der Weg der durch den Mover abgefahren werden soll um von seiner aktuellen Position zu einem Ziel zu gelangen. Abhängig von dem Fahrweg, den Bewegungsdynamikgrenzen des planaren Antriebssystems, der Beladung des Movers und/oder weiteren Faktoren wird eine Bewegungsdynamik entlang des Fahrweges ermittelt.

In einer Ausführung ist die Steuereinheit ausgebildet, um einen zweiten Fahrweg für einen zweiten Mover auf dem Pfadnetz nach vorgegebenen Randbedingungen zu ermitteln, wobei die Steuereinheit ausgebildet ist, um die Magnetfelderzeuger der Sektoren in der Weise mit Strom anzusteuern, dass der zweite Mover entlang des ermittelten zweiten Fahrweges innerhalb des Pfadnetzes über die Antriebsfläche bewegbar ist, und wobei die Steuereinheit bei der Ermittlung der zwei Fahrwege eine Kollision der Mover vermeidet.

In einer Ausführung weist das Pfadnetz wenigstens einen Pfad und/oder wenigstens zwei voneinander getrennte Pfade und/oder wenigstens einen zusammenhängenden Teil des Pfadnetzes auf.

In einer Ausführung ist die Steuereinheit ausgebildet, um anhand von vorgegebenen Regeln und/oder Prioritäten der Mover eine Kollision der Mover insbesondere an Anschlusspunkten zu vermeiden. Beispiele für diese Regeln sind aus dem Straßenverkehr als "Rechts vor Links" oder als Vorfahrtsregel bei Hauptstraßen und Nebenstraßen bekannt. Eine weitere Regel könnte Kollisionen dadurch vermeiden, dass immer der Mover der als erstes den Anschlusspunkt erreicht Vorfahrt hat oder dass der Vorrang eines Movers durch eine eindeutige Rangfolge aller Mover geregelt wird.

In einer Ausführung weist das Pfadnetz wenigstens in einem zusammenhängenden Teil des Pfadnetzes zumindest zwei alternative Pfade auf, über die der Mover von seiner aktuellen Position aus zu einem Ziel bewegbar ist, wobei die Steuereinheit ausgebildet ist, den Fahrweg für den Mover in Abhängigkeit von Randbedingungen und/oder Betriebsbedingungen derart zu ermitteln, dass einer der beiden alternativen Pfade als Fahrweg genutzt wird. Damit kann schnell und flexibel ein Fahrweg des Movers verändert werden.

In einer Ausführung ist das Pfadnetz durch eine Eingabe in die Steuereinheit oder abhängig von Randbedingungen und/oder Betriebsbedingungen zumindest eines Sektors und/oder zumindest eines Movers derart veränderbar, dass wenigstens ein Pfad geändert, dem Pfadnetz hinzugefügt oder aus dem Pfadnetz entfernt wird. Dadurch wird die Flexibilität des Pfadnetzes erhöht.

In einer Ausführung sind die Randbedingungen gegeben durch die Abmessungen der Antriebsfläche d.h. den maximal einnehmbaren Positionen der Mover und/oder durch die maximale Geschwindigkeit und/oder durch die maximale Beschleunigung und/oder die Position der Mover und/oder durch die Position der Ziele und/oder Optimierungsbedingungen für den Fahrweg und/oder weiteren Randbedingungen, wobei die Betriebsbedingungen durch die Temperatur eines Teils eines Sektors und/oder durch die Beladung der Mover und/oder weiteren Betriebsbedingungen gebildet werden. Optimierungsbedingungen für den Fahrweg können möglichst kurze Wegstrecke, möglichst geringer Energieverbrauch oder möglichst geringe Fahrzeit oder weitere Bedingungen sein. Durch die Verwendung von Randbedingungen und Betriebsbedingungen kann eine optimale Ausnutzung des Pfadnetzes erreicht werden und eine Verwendung des Planarantriebssystems innerhalb der Spezifikationen sichergestellt werden.

In einer Ausführung ist die Steuereinheit ausgebildet, das Pfadnetz in vorgegebenen Grenzen zu variieren, wobei die Steuereinheit nach der Variation des Pfadnetzes anhand wenigstens eines vorgegebenen Parameters überprüft, ob die Änderung des Pfadnetzes eine Verbesserung des Parameters gebracht hat, wobei die Steuereinheit die Änderung des Pfadnetzes beibehält, wenn die Änderung des Pfadnetzes eine Verbesserung des Parameters gebracht hat, und wobei die Steuereinheit die Änderung rückgängig macht oder eine weitere Änderung des Pfadnetzes durchführt, wenn die Änderung keine Verbesserung des Parameters gebracht hat. Entsprechende Parameter könnten beispielsweise eine Verkürzung einer Fahrtzeit eines Movers von seiner aktuellen Position zu einem Ziel, eine geringe Anzahl von Beschleunigungsänderungen bei der Bewegung des Movers entlang des Fahrweges, eine möglichst geringe Anzahl an Movern innerhalb eines Teilbereichs der Antriebsfläche, eine möglichst geringe Anzahl an Anschlusspunkten entlang des Fahrweges und/oder weitere Parameter sein, die sich aus einer konkreten Nutzung der Vorrichtung ergeben können. Auf diese Weise kann eine Optimierung oder Anpassung des Pfadnetzes erreicht werden.

In einer Ausführung führt die Steuereinheit die Änderung des Pfadnetzes und die Überprüfung der Verbesserung des Parameters in einem Simulationsprogramm aus, wobei die Steuereinheit die Änderung des Pfadnetzes im realen Betrieb ausführt, wenn sich in der Simulation durch die Änderung des Pfadnetzes eine Verbesserung des Parameters ergeben hat. Mithilfe der Simulation kann ohne Störung des Betriebes der Vorrichtung eine Änderung des Pfadnetzes geprüft werden.

In einer Ausführung ist die Steuereinheit ausgebildet, um das Pfadnetz und/oder eine Änderung des Pfadnetzes mithilfe eines selbstlernenden Verfahrens, insbesondere mit einem Maschinenlernverfahren und/oder einem neuronalen Netz zu ermitteln. Somit kann eine optimale Anpassung des Pfadnetzes erreicht werden.

Es wird ein Verfahren zum Ermitteln eines Fahrweges für wenigstens einen Mover auf einer Antriebsfläche vorgeschlagen, wobei der Mover wenigstens einen zweiten Magnetfelderzeuger aufweist, wobei die Vorrichtung mehrere plattenförmige Sektoren aufweist, wobei die Sektoren Magnetfelderzeuger aufweisen, wobei die Sektoren die Antriebsfläche bilden, wobei wenigstens ein virtuelles Pfadnetz auf der Antriebsfläche vorgesehen ist, wobei ein Fahrweg für einen Mover auf dem Pfadnetz insbesondere nach vorgegebenen Randbedingungen ermittelt wird. Durch die Verwendung des Pfadnetzes kann der Fahrweg für den Mover mit wenig Rechenaufwand ermittelt werden.

In einer Ausführung werden abhängig vom ermittelten Fahrweg die Magnetfelderzeuger der Sektoren in der Weise mit Strom versorgt werden, dass der Mover entlang des ermittelten Fahrweges innerhalb des Pfadnetzes über die Antriebsfläche bewegt wird.

In einer Ausführung wird ein zweiter Fahrweg für einen zweiten Mover auf dem Pfadnetz nach vorgegebenen Randbedingungen ermittelt, wobei die Magnetfelderzeuger der Sektoren in der Weise mit Strom versorgt werden, dass der zweite Mover entlang des ermittelten zweiten Fahrweges innerhalb des Pfadnetzes über die Antriebsfläche bewegt wird, und wobei bei der Ermittlung der zwei Fahrwege eine Kollision der Mover vermieden wird.

In einer Ausführung wird das Pfadnetz aus wenigstens einem Pfad und/oder wenigstens zwei voneinander getrennte Pfaden und/oder wenigstens einem zusammenhängenden Teil des Pfadnetzes gebildet. Hierdurch wird ein möglichst flexibles und effizientes Pfadnetz zur einfachen Ermittlung von Fahrwegen gebildet.

In einer Ausführung wird eine Kollision der Mover insbesondere an den Anschlusspunkten anhand von vorgegebenen Regeln und/oder Prioritäten der Mover vermieden. Die Prioritäten der Mover gewährleisten in diesem Fall eine eindeutige Rangfolge der Mover, die bestimmt welcher Mover bei einer möglichen Kollision an einem Anschlusspunkt Vorrang hat. Ähnliche Regeln werden bei möglichen Kollisionen auf Pfaden angewendet. Dies hat den Vorteil, dass es bei der Bewegung der Mover nicht zu Kollisionen und damit zu Beschädigungen an den Movern und/oder der Beladung der Mover kommt.

In einer Ausführung weist das Pfadnetz wenigstens in einem zusammenhängenden Teil des Pfadnetzes zumindest zwei alternative Pfade auf, über die der Mover von seiner aktuellen Position aus zu einem Ziel bewegbar ist, wobei der Fahrweg für den Mover in Abhängigkeit von Randbedingungen und/oder Betriebsbedingungen derart ermittelt wird, dass einer der beiden alternativen Pfade als Fahrweg genutzt wird. Hierdurch kann eine effiziente Planung des Fahrweges erreicht werden, bei der auf die Randbedingungen und/oder Betriebsbedingungen effizient reagiert wird.

In einer Ausführung ist das Pfadnetz durch eine Eingabe in die Steuereinheit oder abhängig von Randbedingungen und/oder Betriebsbedingungen zumindest eines Sektors und/oder zumindest eines Movers derart veränderbar, dass wenigstens ein Pfad geändert, dem Pfadnetz hinzugefügt oder aus dem Pfadnetz entfernt wird. Hierdurch ist eine Anpassung des Pfadnetzes an geänderte Randbedingungen und/oder Betriebsbedingungen möglich um eine effiziente Planung des Fahrweges zu ermöglichen.

In einer Ausführung wird das Pfadnetz in vorgegebenen Grenzen variiert, wobei nach der Variation des Pfadnetzes anhand wenigstens eines vorgegebenen Parameters überprüft wird, ob die Änderung des Pfadnetzes eine Verbesserung des Parameters gebracht hat, wobei die Änderung des Pfadnetzes beibehalten wird, wenn die Änderung des Pfadnetzes eine Verbesserung des Parameters gebracht hat, und wobei die Änderung rückgängig gemacht oder eine weitere Änderung des Pfadnetzes durchgeführt wird, wenn die Änderung keine Verbesserung des Parameters gebracht hat.

In einer Ausführung werden die Änderung des Pfadnetzes und die Überprüfung der Verbesserung des Parameters in einem Simulationsprogramm ausgeführt, wobei die Änderung des Pfadnetzes im realen Betrieb ausgeführt wird, wenn sich in der Simulation durch die Änderung des Pfadnetzes eine Verbesserung des Parameters ergeben hat.

In einer Ausführung werden das Pfadnetz und/oder eine Änderung des Pfadnetzes mithilfe eines selbstlernenden Verfahrens, insbesondere mit einem Maschinenlernverfahren und/oder einem neuronalen Netz ermittelt.

Die Erfindung wird nachfolgend anhand von Ausführungsbeispielen und unter Bezugnahmen auf Figuren näher erläutert. Dabei zeigen jeweils in schematischer Darstellung
- Figur 1: eine Vorrichtung zum Antreiben eines Movers auf einer Antriebsfläche;
- Figur 2: eine Ansicht eines weiteren Antriebssystems mit sechs nebeneinander angeordneten Statormodulen;
- Figur 3: den Mover des planaren Antriebssystems mit einer Magnetanordnung;
- Figur 4: eine perspektivische Ansicht eines Teils des Antriebssystems;
- Figur 5: eine Explosionsansicht eines Sektors des Antriebssystems mit einer ersten, zweiten, dritten und vierten Statorlage;
- Figur 6: die Statorlagen des ersten Sektors der Vorrichtung mit einzelnen Statorsegmenten;
- Fig. 7: einen Teilausschnitt einer Antriebsfläche mit einem Pfadnetz, auf dem sich zwei Mover bewegen, und eine Steuereinheit;
- Fig. 8: einen Teilausschnitt einer Antriebsfläche mit einer weiteren Ausführung des Pfadnetzes;
- Fig. 9: einen Teilausschnitt einer weiteren Antriebsfläche mit einem weiteren Pfad netz, und
- Fig. 10: einen Teilausschnitt einer weiteren Antriebsfläche mit einem weiteren Pfadnetz.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten planaren Antriebssysteme.

Außerdem betrifft die Erfindung Weiterentwicklungen der in den deutschen Patentanmeldungen DE 102017131304 A1, DE 102017131314 A1, und DE 102017131321 A1

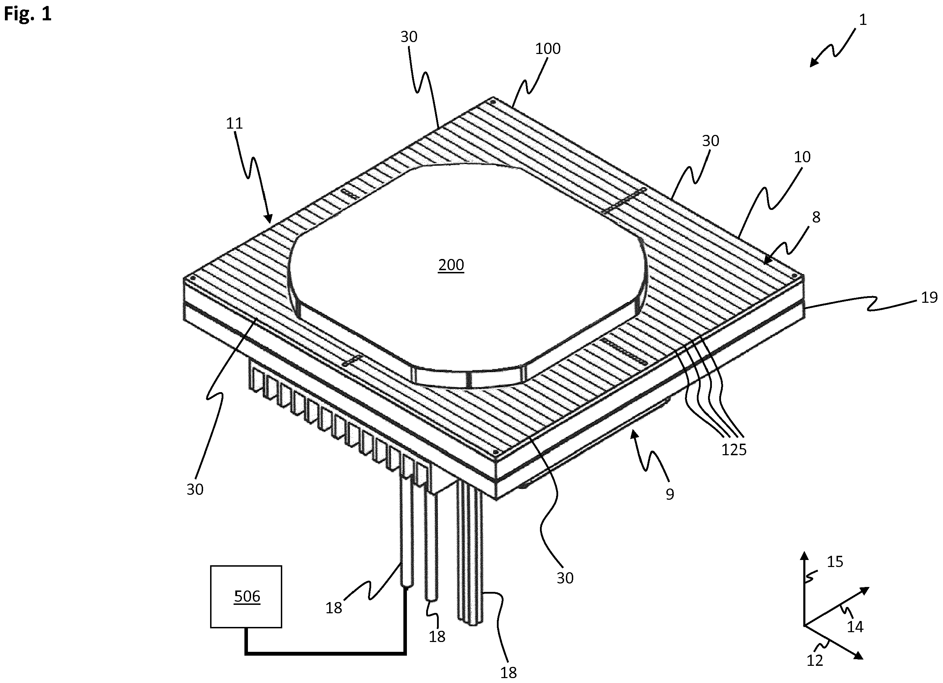

**Fig. 1** zeigt eine Vorrichtung zum Antreiben wenigstens eines Movers 200 auf einer Antriebsfläche in Form eines Planarantriebssystems 1 mit einem Statormodul 10 und einem Läufer, der durch den Mover 200 gebildet wird.

Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d. h. planare, Statorfläche 11 auf. Die Statorfläche 11 bildet zugleich eine Oberfläche des Statormoduls 10.

Die Statorfläche 11 ist senkrecht zu einer vertikalen Richtung 15 orientiert und erstreckt sich über die gesamte Oberseite 8 der Statoreinheit 100 und des Statormoduls 10 entlang der Richtungen 12 und 14. Die Statoreinheit 100 umfasst an der Statorfläche 11 mindestens einen mit einem Antriebsstrom beaufschlagbaren Leiterstreifen 125. Die Statoreinheit 100 kann, wie dargestellt, an der Statorfläche 11 eine Mehrzahl der Leiterstreifen 125 aufweisen. Die Leiterstreifen 125 können von einer Steuereinheit 506 jeweils mit einem Antriebsstrom beaufschlagt werden. Mittels der Antriebsströme in den Leiterstreifen 125 kann ein Magnetfeld erzeugt werden, welches den Mover 200 in Wechselwirkung mit in Fig. 1 nicht dargestellten Antriebsmagneten des Movers 200 antreibt. Der Mover 200 und die Statoreinheit 100 mit den stromdurchflossenen Leiterstreifen 125 bilden einen elektromagnetischen Planarmotor. Die Leiterstreifen 125 bilden Spulenleiter der Statoreinheit 100 und können auch als Spulenleiter oder Magnetfelderzeuger 127 bezeichnet werden.

Der Mover 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste Richtung 12 und die zweite Richtung 14 sind linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der vertikalen Richtung 15 orientiert. Indem der Mover 200 zugleich in der ersten Richtung 12, als auch in der zweiten Richtung 14 angetrieben wird, kann der Mover 200 über der Statorfläche 11 in einer beliebigen Richtung angetrieben werden. Der Mover 200 kann im Betrieb schwebend über der Statorfläche 11 gehalten werden, beispielsweise durch eine magnetische Wechselwirkung zwischen den Antriebsmagneten und geeigneten Antriebsströmen in den Leiterstreifen 125. Neben einem Antreiben des Movers 200 in der ersten und/oder zweiten Richtung 12, 14 ist auch ein Antreiben in der dritten, vertikalen Richtung 15 möglich. Zudem kann der Mover 200 auch um seine Achse gedreht werden. Die Leiterstreifen stellen Leiterbahnen dar.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Eine Ausdehnung der Statoreinheit 100 in der vertikalen Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte.

An der Unterseite 9 des Statormoduls 10 oder an der Unterseite des Modulgehäuses 19 können weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Außenkanten 30 der Statoreinheit 100, so dass die weiteren Komponenten die Außenkanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18. Die Anschlussleitungen 18 können beispielsweise eine Eingangsleitung eines Datennetzwerks, eine Ausgangsleitung des Datennetzwerks und eine Energieversorgungsleitung zur Versorgung des Statormoduls 10 mit elektrischer Energie umfassen. Zudem kann eine Steuereinheit 506 mit einer Anschlussleitung 18 verbunden sein. Insbesondere kann dem Statormodul 10 über die Energieversorgungsleitung elektrische Energie zur Erzeugung der Antriebsströme zugeführt werden. Über das Datennetzwerk kann das Statormodul 10 mit einer Steuereinheit des Planarantriebssystems verbunden sein, wobei die Steuereinheit des Planarantriebssystems von der Steuereinheit 506 gebildet sein kann. Mittels des Datennetzwerks können beispielsweise Steuerdaten zum Steuern des Movers 200 bzw. zum Steuern des zielgerichteten Beaufschlagens der Leiterstreifen mit geeigneten Antriebsströmen mit der Steuereinheit 506 ausgetauscht werden.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 12 eine Ausdehnung zwischen 100mm und 500mm, insbesondere zwischen 120mm und 350mm, insbesondere von 240mm aufweisen. Das Statormodul 10 kann in der vertikalen Richtung 15 eine Ausdehnung zwischen 10mm und 100mm, insbesondere zwischen 15mm und 60mm, insbesondere von 30mm aufweisen. Das Modulgehäuse 19 kann in der vertikalen Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11.

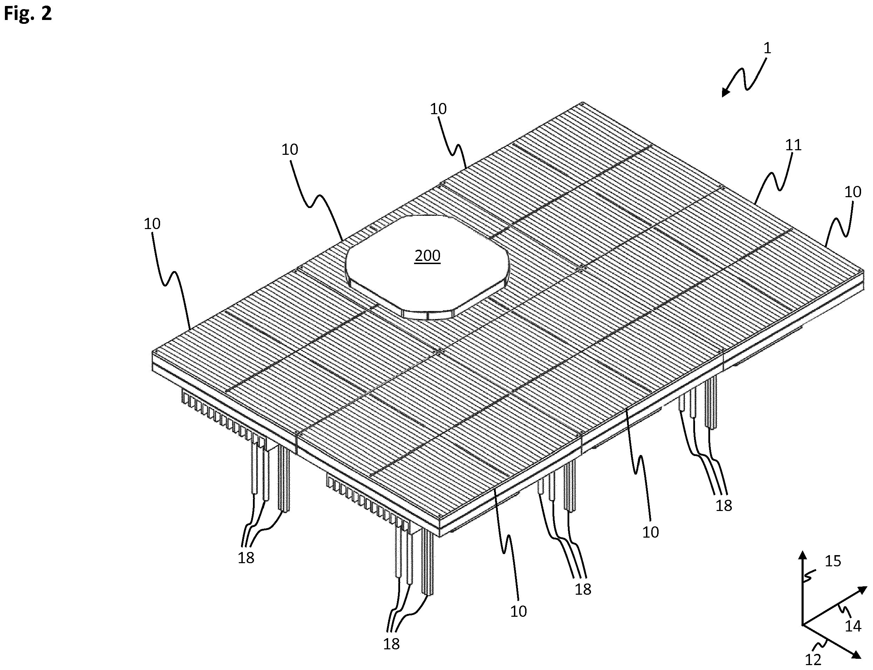

Mehrere Exemplare des Statormoduls 10 können derart nebeneinander angeordnet werden, dass die Außenkanten 30 benachbarter Statormodule 10 aneinander liegen und die Statorflächen 11 der Statormodule 10 eine zusammenhängende Antriebsfläche bilden, über die der Mover 200 unterbrechungsfrei bewegt werden kann, wie in **Fig. 2** dargestellt ist. Da die Seitenflächen des Statormoduls 10 an den Außenkanten 30 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinander liegenden Seitenflächen der Statoreinheiten 100 oder aneinander liegenden Außenkanten 30 der Statorflächen 11 angeordnet werden.

Benachbarte Statormodule 10 sind jeweils derart aneinander anschließend angeordnet, dass die Außenkanten 30 der Statorflächen 11 benachbarter Statormodule 10 aneinander liegen. Dadurch bilden die Statorflächen 11 der Statormodule 10 eine zusammenhängende, planare Antriebsfläche für den Mover 200. Der Mover 200 kann nahtlos von der Statorfläche 11 eines der Statormodule 10 auf die oder über die Statorfläche 11 des benachbarten Statormoduls 10 bewegt werden. Jedem der Statormodule 10 können über jeweils eigene Anschlussleitungen 18 Steuersignale und/oder Energie zugeführt werden. Alternative, hier nicht dargestellte, Ausführungsformen der Statormodule 10 können auch elektrische Verbindungselemente aufweisen, mittels derer Steuersignale und/oder elektrische Energie von einem Statormodul 10 zum benachbarten Statormodul 10 übertragen werden kann. Derartige Verbindungselemente können beispielsweise an den Seitenflächen der Statormodule 10 angeordnet sein. Die Verbindungselemente können als Steckverbinder oder als aneinander anordbare Kontaktflächen ausgebildet sein.

Bei alternativen, hier ebenfalls nicht dargestellten Ausführungsformen können die Statormodule 10 auch sternförmig über jeweils eigene Anschlussleitungen an eine zentrale Energieversorgungseinrichtung und/oder eine zentrale Steuereinheit angeschlossen sein.

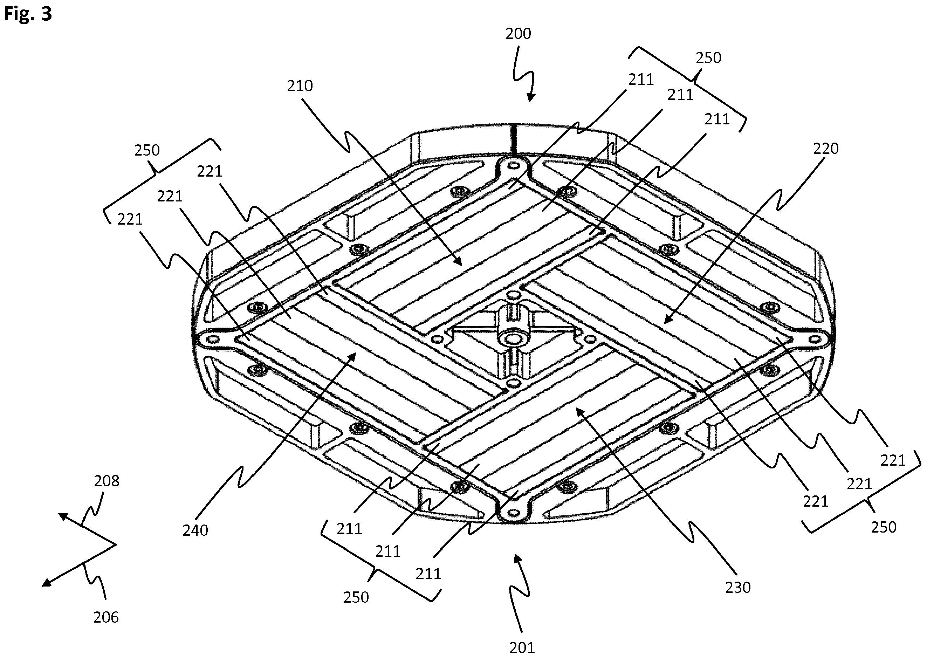

**Fig. 3** zeigt den Läufer, d. h. den Mover 200, in einer Ansicht von unten auf eine Unterseite des Movers 200. Der Mover 200 weist an der Unterseite eine Magnetanordnung 201 auf. Die Magnetanordnung 201 ist rechteckig, insbesondere quadratisch, ausgebildet und umfasst mehrere Magneten. Die Unterseite des Movers 200 ist, insbesondere im Bereich der Magneten der Magnetanordnung 201, eben bzw. planar ausgebildet. Im Betrieb ist die Unterseite des Movers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete Antriebsmagnete 211 auf. Insbesondere können die erste und die dritte Magneteinheit 210, 230 jeweils drei Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte weitere Antriebsmagnete 221 auf. Die erste und dritte Magneteinheit 210, 230 dient im Betrieb einem Antreiben des Movers 200 in der zweiten Läuferrichtung 208 und die zweite und vierte Magneteinheit 220, 240 dient im Betrieb einem Antreiben des Movers 200 in der ersten Läuferrichtung 206. Die Antriebsmagneten 211 der ersten und dritten Magneteinheit 210, 230 und die weiteren Antriebsmagneten 221 der zweiten und vierten Magneteinheit 220, 240 sind jeweils senkrecht zu der ersten und der zweiten Läuferrichtung 206, 208 magnetisiert.

Die Antriebsmagneten 211 und/oder weiteren Antriebsmagneten 221 stellen zweite Magnetfelderzeuger 250 dar. Die zweiten Magnetfelderzeuger 250 können auch andere Materialien, Funktionsprinzipien und/oder Formen aufweisen.

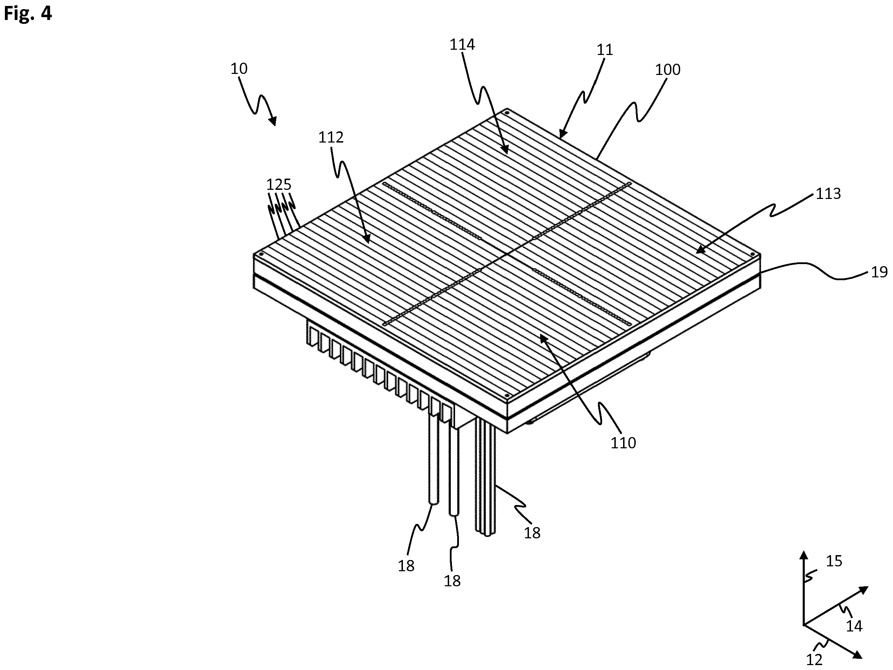

**Fig. 4** zeigt das Statormodul 10 des Planarantriebssystems 1 in einer perspektivischen Ansicht ohne den Mover 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten Leiterstreifen 125. Jeder der Leiterstreifen 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 umfassen jeweils ein Viertel der Fläche, d.h. einen Quadranten, der Statoreinheit 100.

Innerhalb der Statorsektoren 110, 112, 113, 114 sind die Leiterstreifen 125 in mehreren übereinanderliegenden Statorlagen oder Statorebenen angeordnet, wobei jede der Statorlagen lediglich Leiterstreifen 125 umfasst, die entweder im Wesentlichen entlang der ersten Richtung 12 oder im Wesentlichen entlang der zweiten Richtung 14 länglich ausgedehnt sind. Von der Ausdehnung der Leiterstreifen 125 abgesehen und soweit im Folgenden keine Unterschiede beschrieben werden, sind die Statorsektoren 110, 112, 113, 114 auf den unterschiedlichen Statorlagen identisch ausgebildet. Bei der in Fig. 4 dargestellten Statoreinheit 100 des Statormoduls 10 umfasst die Statorlage an der Statorfläche 11 lediglich Leiterstreifen 125, welche entlang der ersten Richtung 12 länglich ausgedehnt und entlang der zweiten Richtung 14 nebeneinander und aneinander anschließend angeordnet sind.

Die in Fig. 4 sichtbare Statorlage an der Statorfläche 11 bildet eine erste Statorlage der Statoreinheit 100. In der vertikalen Richtung 15 unterhalb der ersten Statorlage umfasst die Statoreinheit 100 mindestens noch eine zweite Statorlage.

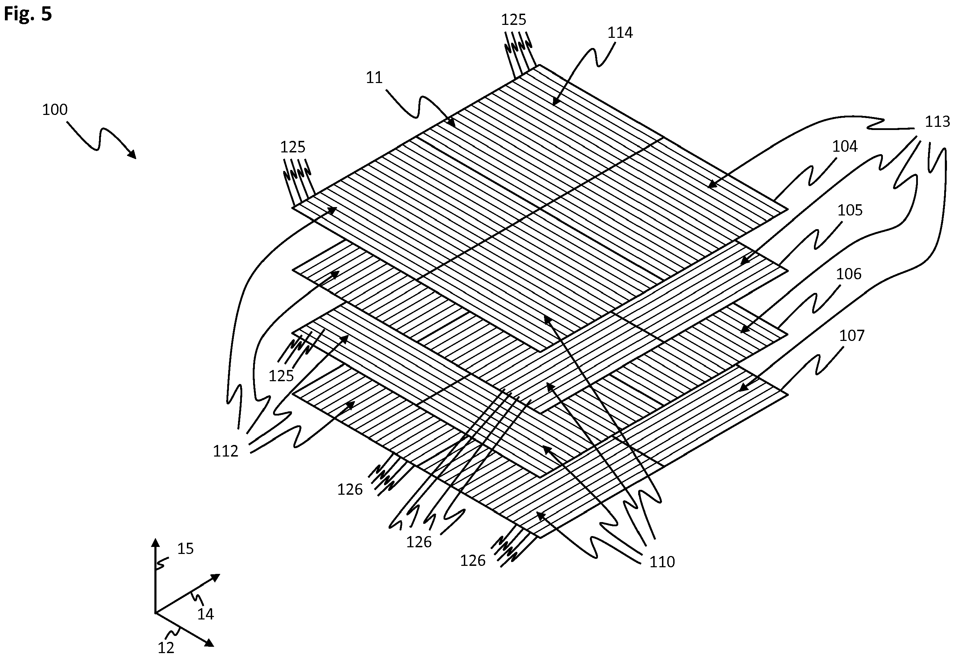

**Fig. 5** zeigt eine schematische perspektivische Darstellung einer Explosionsansicht der Statoreinheit 100 mit den einzelnen Statorlagen.

Die Statoreinheit 100 umfasst in der vertikalen Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet wie die in Fig. 4 dargestellte erste Statorlage 104 an der Statorfläche 11 der Statoreinheit 100.

Die ersten bis vierten Statorsektoren 110, 112, 113, 114 umfassen in der dritten Statorlage 106, wie in der ersten Statorlage 104, entlang der ersten Richtung 12 länglich ausgedehnte und in der zweiten Richtung 14 nebeneinander und aneinander anschließend angeordnete Leiterstreifen 125. In der zweiten Statorlage 105 und in der vierten Statorlage 107 umfassen die ersten bis vierten Statorsektoren 110, 112, 113, 114 weitere Leiterstreifen 126. Soweit im Folgenden keine Unterschiede beschrieben werden, sind die weiteren Leiterstreifen 126 ausgebildet wie die Leiterstreifen 125 in der ersten Statorlage 104 und in der dritten Statorlage 106. Anders als die Leitersteifen 125 der ersten und dritten Statorlage 104, 106, sind die weiteren Leiterstreifen 126 der zweiten und vierten Statorlage 105, 107 entlang der zweiten Richtung 14 länglich ausgedehnt und in der ersten Richtung 12 nebeneinander und aneinander anschließend angeordnet.

Die ersten bis vierten Statorsektoren 110, 112, 113, 114 umfassen in der ersten und dritten Statorlage 104, 106 ausschließlich die entlang der ersten Richtung 12 länglich ausgedehnten Leiterstreifen 125 und nicht auch noch zusätzlich die entlang der zweiten Richtung 14 länglich ausgedehnten weiteren Leiterstreifen 126. Ebenso umfassen die ersten bis vierten Statorsektoren 110, 112, 113, 114 in der zweiten und vierten Statorlage 105, 107 ausschließlich die entlang der zweiten Richtung 14 länglich ausgedehnten weiteren Leiterstreifen 126 und nicht auch noch zusätzlich die entlang der ersten Richtung 12 länglich ausgedehnten Leiterstreifen 125.

Die ersten bis vierten Statorsektoren 110, 112, 113, 114 weisen in allen ersten bis vierten Statorlagen 104, 105, 106, 107 jeweils die gleichen Abmessungen auf. Insbesondere weisen die ersten bis vierten Statorsektoren 110, 112, 113, 114 in allen ersten bis vierten Statorlagen 104, 105, 106, 107 in der ersten Richtung 12 und in der zweiten Richtung 14 jeweils gleiche Abmessungen auf.

Die Leiterstreifen 125 und weiteren Leiterstreifen 126 übereinander angeordneter erster bis vierter Statorlagen 104, 105, 106, 107 sind jeweils elektrisch isoliert voneinander ausgebildet. Beispielsweise können die ersten bis vierten Statorlagen 104, 105, 106, 107 jeweils als voneinander isolierte Leiterbahnlagen einer mehrlagigen Leiterplatte ausgebildet sein.

Die ersten bis vierten Statorsektoren 110, 112, 113, 114 sind unabhängig voneinander bestrombar ausgebildet. Insbesondere sind die Leiterstreifen 125 und die weiteren Leiterstreifen 126 der ersten bis vierten Statorsektoren 110, 112, 113, 114 auf der Statoreinheit 100 elektrisch isoliert voneinander ausgebildet.

Während die Leiterstreifen 125 und weiteren Leiterstreifen 126 der einzelnen ersten bis vierten Statorsektoren 110, 112, 113, 114 auf der Statoreinheit 100 jeweils elektrisch isoliert von den Leiterstreifen 125 und weiteren Leiterstreifen 126 der übrigen ersten bis vierten Statorsektoren 110, 112, 113, 114 ausgebildet sind, können die Leiterstreifen 125 und weiteren Leiterstreifen 126 innerhalb der einzelnen ersten bis vierten Statorsektoren 110, 112, 113, 114 jeweils elektrisch leitend miteinander verbunden sein. Insbesondere können innerhalb der ersten bis vierten Statorsektoren 110, 112, 113, 114 jeweils übereinanderliegende Leiterstreifen 125 der ersten Statorlage 104 und der dritten Statorlage 106 elektrisch leitend miteinander verbunden sein. Beispielsweise können jeweils übereinanderliegende Leiterstreifen 125 der ersten bis vierten Statorsektoren 110, 112, 113, 114 in Reihe geschaltet sein. Ebenso können innerhalb der ersten bis vierten Statorsektoren 110, 112, 113, 114 jeweils übereinanderliegende weitere Leiterstreifen 126 der zweiten Statorlage 105 und der vierten Statorlage 107 elektrisch leitend miteinander verbunden sein. Beispielsweise können jeweils übereinanderliegende weitere Leiterstreifen 126 der ersten bis vierten Statorsektoren 110, 112, 113, 114 in Reihe geschaltet sein.

Alternative, hier nicht dargestellte Ausführungsformen der Statoreinheit 100 können zwischen der zweiten und dritten Statorlage 105, 106 in der vertikalen Richtung 15 untereinander angeordnete weitere Statorlagen umfassen. Dabei kann die Statoreinheit 100 in der vertikalen Richtung 15 jeweils abwechselnd Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen. Bei einer dazu alternativen, ebenfalls nicht dargestellten Ausführungsform kann die Statoreinheit 100 in der vertikalen Richtung 15 jeweils Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen, wobei die Summe der Statorlagen mit im Wesentlichen entlang der ersten Richtung 12 länglich ausgedehnten Leiterstreifen 125 und die Summe der Statorlagen mit im Wesentlichen entlang der zweiten Richtung 14 länglich ausgedehnten weiteren Leiterstreifen 126 einen gleichen mittleren Abstand zu der Statorfläche 11 aufweisen. Außerdem können bei alternativen, nicht dargestellten Ausführungsformen der Statoreinheit 100 zwischen der ersten und der zweiten Statorlage 104, 105 und/oder zwischen der dritten und der vierten Statorlage 106, 107 weitere Statorlagen mit entlang der ersten Richtung 12 ausgedehnten Leiterstreifen 125 oder mit entlang der zweiten Richtung 14 ausgedehnten weiteren Leiterstreifen 126 angeordnet sein.

Die Leiterstreifen 125, 126 der ersten bis vierten Statorsektoren 110, 112, 113, 114 sind innerhalb der ersten bis vierten Statorlagen 104, 105, 106, 107 jeweils zu Statorsegmenten zusammengefasst.

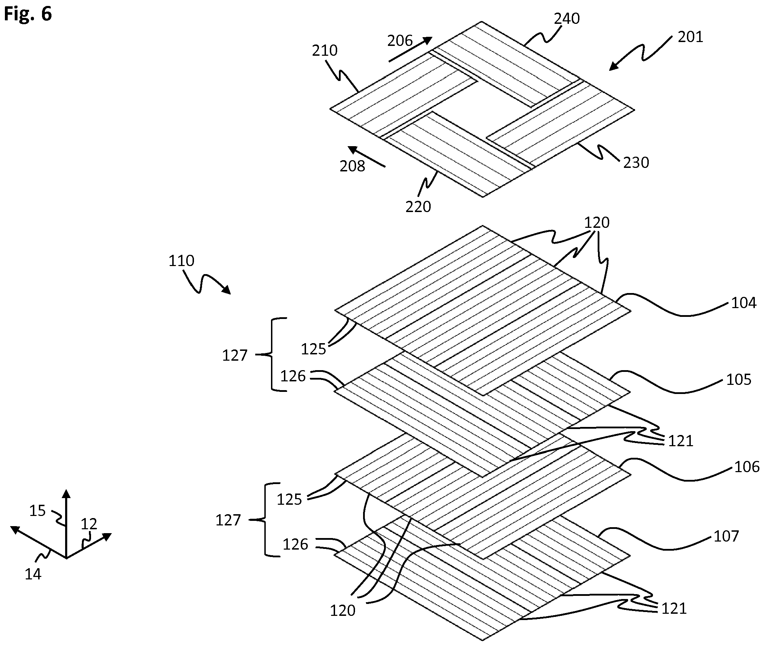

**Fig. 6** zeigt eine schematische Darstellung der ersten bis vierten Statorlagen 104, 105, 106, 107 des ersten Statorsektors 110 mit den einzelnen Statorsegmenten.

Die Leiterstreifen 125 und weiteren Leiterstreifen 126 des ersten Statorsektors 110 sind innerhalb der ersten bis vierten Statorlagen 104, 105, 106, 107 jeweils zu Statorsegmenten 120, 121 zusammengefasst. Der erste Statorsektor 110 umfasst in jeder ersten bis vierten Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Leiterstreifen 125 oder weitere Leiterstreifen 126. Der erste Statorsektor 110 umfasst in der ersten und dritten Statorlage 104, 106 jeweils drei erste Statorsegmente 120 und in der zweiten und vierten Statorlage 105, 107 jeweils drei zweite Statorsegmente 121. Die ersten Statorsegmente 120 umfassen jeweils sechs nebeneinanderliegende der entlang der zweiten Richtung 14 nebeneinander angeordneten und entlang der ersten Richtung 12 länglich ausgedehnten Leiterstreifen 125. Die zweiten Statorsegmente 121 umfassen jeweils sechs nebeneinanderliegende der entlang der ersten Richtung 12 nebeneinander angeordneten und entlang der zweiten Richtung 14 länglich ausgedehnten weiteren Leiterstreifen 126.

Der erste Statorsektor 110 der Statoreinheit 100 umfasst damit in der ersten Statorlage 104 und in der dritten Statorlage 106 ausschließlich Leiterstreifen 125, die entlang der ersten Richtung 12 länglich ausgedehnt sind, und in der zweiten Statorlage 105 und in der vierten Statorlage 107 ausschließlich weitere Leiterstreifen 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und dritten Statorlage 104, 106 des ersten Statorsektors 110 in der ersten Richtung 12 über die drei in der ersten Richtung 12 nebeneinander angeordneten zweiten Statorsegmente 121 der zweiten und vierten Statorlage 105, 107 des ersten Statorsektors 110 erstreckt. Außerdem erstrecken sich die zweiten Statorsegmente 121 der zweiten und vierten Statorlage 105, 107 des ersten Statorsektors 110 in der zweiten Richtung 14 über alle in der zweiten Richtung 14 nebeneinander angeordneten ersten Statorsegmente 120 der ersten und dritten Statorlage 104, 106 des ersten Statorsektors 110.

Die Anordnung der Leiterstreifen 125 und weiteren Leiterstreifen 126 in den ersten bis vierten Statorlagen 104, 105, 106, 107 des zweiten Statorsektors 112, des dritten Statorsektors 113 und des vierten Statorsektors 114 entspricht der in Fig. 6 dargestellten Anordnung der Leiterstreifen 125 und weiteren Leiterstreifen 126 in den ersten bis vierten Statorlagen 104, 105, 106, 107 des ersten Statorsektors 110.

Im Betrieb des Planarantriebssystems 1 kann der Mover 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die Leiterstreifen 125 der ersten Statorsegmente 120 erzeugten Magnetfeld wechselwirken, um den Mover 200 entlang der zweiten Richtung 14 anzutreiben. Die zweite Magneteinheit 220 und die vierte Magneteinheit 240 können im Betrieb mit dem durch die weiteren Leiterstreifen 126 der zweiten Statorsegmente 121 erzeugten Magnetfeld wechselwirken, um den Mover 200 entlang der ersten Richtung 12 anzutreiben.

Alternativ kann der Mover 200, anders als in Fig. 6 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Movers 200 in die erste Richtung 12 und die zweite und die vierte Magneteinheit 220, 240 mit dem Magnetfeld der ersten Statorsegmente 120 zum Antreiben des Movers 200 in die zweite Richtung 14 zusammen.

Die Leiterstreifen 125 oder weiteren Leiterstreifen 126 der einzelnen ersten oder zweiten Statorsegmente 120, 121 sind jeweils unabhängig von den Leiterstreifen 125 oder weiteren Leiterstreifen 126 der übrigen ersten oder zweiten Statorsegmente 120, 121 mit den Antriebsströmen bestrombar. Insbesondere hängen die Antriebsströme in einem der ersten oder zweiten Statorsegmente 120, 121 nicht zwingend von Antriebsströmen in einem der anderen ersten oder zweiten Statorsegmente 120, 121 ab. Außerdem können die Leiterstreifen 125 oder weiteren Leiterstreifen 126 eines der ersten oder zweiten Statorsegmente 120, 121 mit Antriebsströmen beaufschlagt werden, während die Leiterstreifen 125 oder weiteren Leiterstreifen 126 eines anderen, beispielsweise eines benachbarten, ersten oder zweiten Statorsegments 120, 121 stromlos sind. Die Leiterstreifen 125 oder weiteren Leiterstreifen 126 der einzelnen ersten oder zweiten Statorsegmente 120, 121 sind auf der Statoreinheit 100 elektrisch isoliert von den Leiterstreifen 125 oder weiteren Leiterstreifen 126 der übrigen ersten oder zweiten Statorsegmente 120, 121 ausgeführt. Die Leiterstreifen 125 oder weiteren Leiterstreifen 126 unterschiedlicher erster oder zweiter Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Leiterstreifen 125 oder weiteren Leiterstreifen 126 in den einzelnen ersten bis vierten Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Leiterstreifen 125 oder weiteren Leiterstreifen 126 zu Dreiphasensystemen mit einem gemeinsamen Sternpunkt zusammengeschaltet sein. Die Dreiphasensysteme können jeweils sechs benachbarte Leiterstreifen 125 oder sechs benachbarte weitere Leiterstreifen 126 umfassen. Die Anzahl benachbarter Leiterstreifen 125 oder weiteren Leiterstreifen 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Leiterstreifen 125 oder weiteren Leiterstreifen 126 zu Mehrphasensystemen werden zur Bestromung der Leiterstreifen 125 oder weiteren Leiterstreifen 126 weniger Kontakte benötigt als bei einer separaten Bestromung der einzelnen Leiterstreifen 125 oder weiteren Leiterstreifen 126. Dadurch wird der für die Bestromung der Leiterstreifen 125 oder weiteren Leiterstreifen 126 benötigte Hardwareaufwand, insbesondere die Anzahl der für die Bestromung benötigten Stromerzeugungseinheiten, reduziert.

Die ersten bis vierten Statorsektoren 110, 112, 113, 114 können, wie in den Fig. 4 und 5 dargestellt, in jeder ersten bis vierten Statorlage 104, 105, 106, 107 jeweils achtzehn Leiterstreifen 125 oder weitere Leiterstreifen 126 umfassen. Jeweils sechs benachbarte Leiterstreifen 125 oder weitere Leiterstreifen 126 können zu einem Dreiphasensystem verschaltet sein und die ersten bis vierten Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Leiterstreifen 125 oder weitere Leiterstreifen 126, die im Wesentlichen in der gleichen Richtung 12, 14 ausgedehnt sind und in den ersten bis vierten Statorlagen 104, 105, 106, 107 übereinanderliegen, in Serie zu einem gemeinsamen Dreiphasensystem verschaltet sein. Die Leiterstreifen 125 oder weiteren Leiterstreifen 126 können dabei derart verschaltet sein, dass in der vertikalen Richtung 15 übereinanderliegende Leiterstreifen 125 oder weitere Leiterstreifen 126 jeweils mit dem gleichen Antriebsstrom beaufschlagt werden. Die Dreiphasensysteme weisen damit drei Phasen auf, die aus in den ersten bis vierten Statorlagen 104, 105, 106, 107 übereinanderliegenden Leiterstreifen 125 oder weiteren Leiterstreifen 126 zusammengeschaltet sind.

Beispielsweise können in den einzelnen ersten bis vierten Statorlagen 104, 105, 106, 107 jeweils alle übereinanderliegenden und parallel ausgerichteten Leiterstreifen 125 oder weiteren Leiterstreifen 126 in Serie geschaltet sein. Insbesondere können die Leiterstreifen 125 von in der ersten Statorlage 104 und in der dritten Statorlage 106 übereinanderliegenden Dreiphasensystemen, sowie die weiteren Leiterstreifen 126 von in der zweiten Statorlage 105 und in der vierten Statorlage 107 übereinanderliegenden Dreiphasensystemen jeweils seriell zu einem gemeinsamen Dreiphasensystem verschaltet sein. Dabei können jeweils alle in der vertikalen Richtung 15 übereinanderliegenden und parallel orientierten Leiterstreifen 125 oder weiteren Leiterstreifen 126 der ersten und dritten Statorlage 104, 106 und der zweiten und vierten Statorlage 105, 107 in Serie geschaltet sein.

Insbesondere sind bei der Statoreinheit 100 innerhalb der einzelnen Statorsegmente 120 die entlang der ersten Richtung 12 länglich ausgedehnten Leiterstreifen 125 jeweils zu Mehrphasensystemen mit einem gemeinsamen Sternpunkt verschaltet. Dabei sind die einzelnen Mehrphasensysteme verschiedener Statorsegmente 120 jeweils unabhängig voneinander bestrombar. Ebenso sind alle weiteren Leiterstreifen 126 der einzelnen weiteren Statorsegmente 121 jeweils zu weiteren Mehrphasensystemen verschaltet. Die einzelnen weiteren Mehrphasensysteme der weiteren Statorsegmente 121 sind jeweils unabhängig voneinander und unabhängig von den Mehrphasensystemen der Statorsegmente 120 bestrombar. Insbesondere sind die Leiterstreifen 125 der Statorsegmente 120 und die weiteren Leiterstreifen 126 der weiteren Statorsegmente 121 jeweils zu Dreiphasensystemen verschaltet. Die Leiterstreifen 125 und die weiteren Leiterstreifen 126 können jeweils mit einem dreiphasigen Antriebsstrom beaufschlagt werden. Die Antriebsströme umfassen eine erste Phase U, eine zweite Phase V und eine dritte Phase W, die untereinander jeweils einen Phasenversatz von 120° aufweisen.

Die Leiterstreifen 125 sind räumlich in der zweiten Richtung 14 um jeweils ein Drittel der wirksamen Wellenlänge der mit den Leiterstreifen 125 wechselwirkenden Antriebsmagnete 211 der ersten und dritten Magneteinheit 210, 230 versetzt angeordnet. Die weiteren Leiterstreifen 126 sind räumlich in der ersten Richtung 12 um jeweils ein Drittel der wirksamen weiteren Wellenlänge der mit den weiteren Leiterstreifen 126 wechselwirkenden weiteren Antriebsmagnete 221 der zweiten und vierten Magneteinheit 220, 240 versetzt angeordnet.

Die Leiterstreifen 125 und die weiteren Leiterstreifen 126 stellen elektrische Magnetfelderzeuger 127 dar. Die Magnetfelderzeuger 127 können auch andere Materialien, Funktionsprinzipien und/oder Formen aufweisen.

Der Mover 200 stellt das bewegbare Element, somit den Läufer der Vorrichtung dar und weist Mittel zur Erzeugung eines Magnetfeldes, insbesondere Magneten oder Permanentmagneten auf, die als zweite Magnetfelderzeuger 250 bezeichnet werden. Das Magnetfeld des Movers 200 sorgt mit dem durch die Magnetfelderzeuger 127 erzeugten, veränderbaren Magnetfeld der Statoreinheit 100 dafür, dass der Mover 200 über die Statoreinheit 100 bewegt wird, so dass insbesondere ein Luftspalt zwischen der Statoreinheit 100 und dem Mover 200 ausgebildet wird.

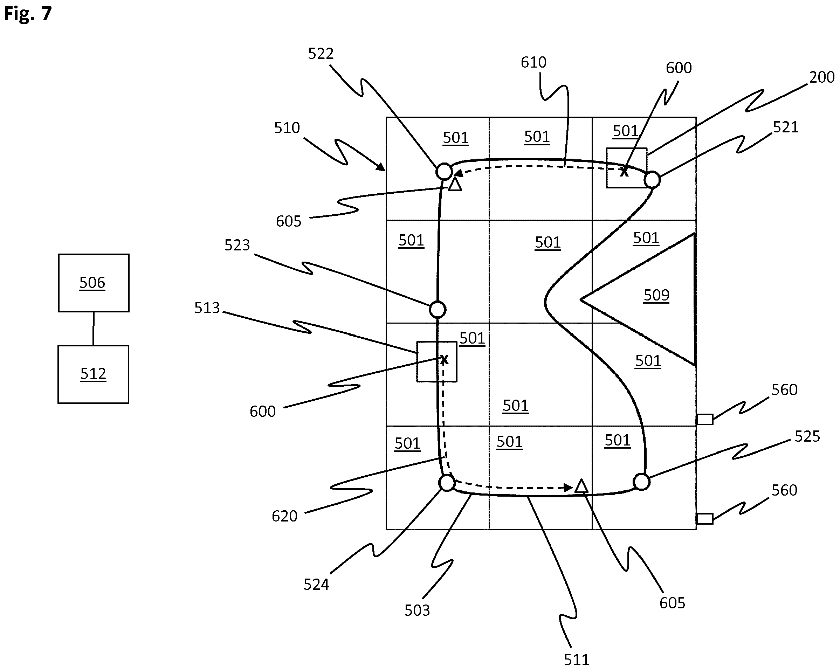

**Fig. 7** zeigt in einer schematischen Darstellung einen Ausschnitt einer Antriebsfläche 510 in einer Draufsicht. Die Antriebsfläche 510 kann durch eine Vielzahl von Statormodulen 10 des in den Figuren 1 bis 6 beschriebenen Planarantriebssystems 1 ausgebildet sein. Es können jedoch auch andere Ausführungsformen von Planarantriebssystemen verwendet werden, die mithilfe von Magnetfeldern einen Mover 200 auf einer Antriebsfläche 510 bewegen. Es sind zwölf Sektoren 501 dargestellt. Ein Sektor 501 kann durch ein Statormodul 10 der Figuren 1 bis 6 gebildet sein. Die Sektoren 501 weisen in dem Ausführungsbeispiel die Form von Quadraten auf. Abhängig von der gewählten Ausführung können die Sektoren 501 auch andere Formen wie z.B. Rechtecke oder Dreiecke usw. aufweisen. Ein Sektor 501 kann z.B. eine Größe im Bereich von 150mm x 150mm bis zu 240mm x 240mm aufweisen. Abhängig von der gewählten Ausführungsform kann ein Sektor 501 auch andere Größen aufweisen. Zudem können die Sektoren 501 auch unterschiedliche Größen aufweisen.

Zudem sind ein Mover 200 und ein zweiter Mover 513 auf der Antriebsfläche 510 angeordnet. Der Mover 200 ist beispielsweise in Form eines Movers 200 ausgebildet, wie in den Figuren 1 bis 3 beschrieben. Der Mover 200 kann eine quadratische, runde oder rechteckige Form oder auch andere Formen aufweisen. Der Mover 200 kann beispielsweise eine Größe im Bereich von 100mm x 100mm bis zu 200mm x 200mm aufweisen. Der Mover 200 kann eine Dicke im Bereich von 8mm bis 20mm aufweisen. Die Antriebsfläche 510 und der Mover 200 können ausgebildet sein, um den Mover 200 mit einer Geschwindigkeit von z.B. 1m/s bis 6m/s zu bewegen. Die Antriebsfläche 510 und der Mover 200 können ausgebildet sein, um den Mover 200 mit einer Beschleunigung von bis zu 30m/s² oder mehr zu bewegen. Zudem kann der Mover 200 ausgebildet sein, um eine Last von bis zu 1,5kg und mehr zu tragen. Zudem kann der Mover 200 ausgebildet sein, um mit einem Abstand zur Antriebsfläche 510 von bis zu 6mm oder mehr bewegt zu werden. Der zweite Mover 513 kann identisch zum Mover 200 ausgebildet sein.

Weiterhin ist zusätzlich ein Objekt 509 auf der Antriebsfläche 510 angeordnet, welches beispielsweise ein Hindernis darstellt und somit stets umfahren werden muss. Die Steuereinheit 506 ist mit einem Datenspeicher 512 verbunden und steht direkt oder indirekt mit Magnetfelderzeugern 127 der Sektoren 501 in Verbindung. Zudem ist die Steuereinheit 506 mit Sensoren 560 der Antriebsfläche 510 verbunden, die beispielsweise eine aktuelle Position des Movers 200 und/oder des zweiten Movers 513 erfassen und an die Steuereinheit 506 weiterleiten. Zudem kann die Steuereinheit 506 in einem Datenspeicher 512 Informationen über geplante beziehungsweise berechnete Positionen des Movers 200 und zweiten Movers 513, berechnete Werte für die Geschwindigkeiten des Movers 200 und zweiten Movers 513, berechnete Werte für die Beschleunigungen des Movers 200 und zweiten Movers 513, berechnete Werte für Bewegungsrichtungen des Movers 200 und zweiten Movers 513 und/oder berechnete Werte für den Ruck des Movers 200 und zweiten Movers 513 abgespeichert sein.

Auf der Antriebsfläche 510 ist ein Pfadnetz 511 mit einem Pfad 503, der im Folgenden auch als erster Pfad 503 bezeichnet wird, in Form einer durchgezogenen Linie dargestellt. Der Pfad 503 ist in dieser Ausführung geschlossen und weist keinen Anschlusspunkt zu anderen Pfaden auf. Auf dem geschlossenen Pfad 503 sind in Form von Kreisen eine erste, eine zweite, eine dritte, eine vierte und eine fünfte Station 521, 522, 523, 524, 525 dargestellt. Die ersten bis fünften Stationen 521, 522, 523, 524, 525 stellen Positionen dar, an denen eine Ladung bzw. ein vom Mover 200 oder zweiten Mover 513 transportiertes Produkt bearbeitet werden können. Abhängig von vorgegebenen Daten, die beispielsweise im Datenspeicher 512 abgelegt sind, legt die Steuereinheit 506 fest, an welchen ersten bis fünften Stationen 521, 522, 523, 524, 525 der Mover 200 und/oder der zweite Mover 513 anhält und/oder eine Ladung aufnimmt und/oder eine Ladung abgibt und/oder eine Bearbeitung der Ladung durch weitere, nicht dargestellte Maschinen erfolgt. Der erste Pfad 503 legt einen Pfad fest, auf dem die Mover 200, 513 von der Steuereinheit 506 bewegt werden können. Das erste Pfadnetz 511 und die ersten bis fünften Stationen 521, 522, 523, 524, 525 sind im Datenspeicher 512 abgelegt. Die Steuereinheit 506 kann abhängig von einem Ziel 605 für die jeweiligen Mover 200, 513, welche im Datenspeicher 512 abgelegt sind, abhängig von dem Pfadnetz 511 und abhängig von weiteren Randbedingungen und/oder Betriebsbedingungen einen erster Fahrweg 610 für den Mover 200 und einen zweiten Fahrweg 620 für den zweiten Mover 513 ermitteln. Diese ersten und zweiten Fahrwege 610, 620 legen die jeweilige Bewegung der Mover 200, 513 auf dem ersten Pfad 503 des Pfadnetzes 511 fest. Zur besseren Darstellung sind sowohl die Ziele 605 als auch die ersten und zweiten Fahrwege 610, 620 leicht neben dem Pfad 503 dargestellt, obwohl die ersten und zweiten Fahrwege 610, 620 eine Bewegung der Mover 200, 513 auf dem Pfad 503 festlegen.

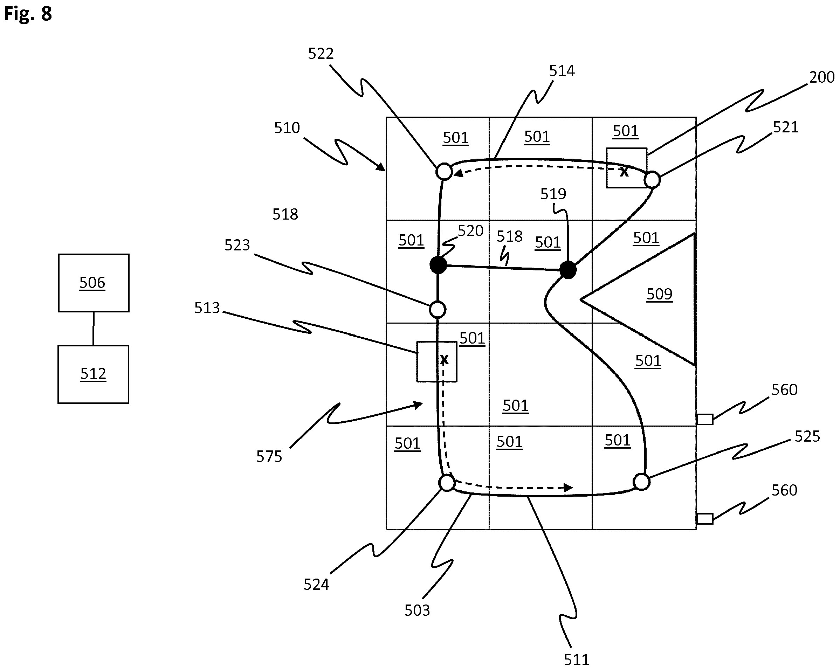

**Fig. 8** zeigt in einer schematischen Darstellung eine Draufsicht auf einen Ausschnitt einer Antriebsfläche 510 gemäß Fig. 7, wobei bei dieser Ausführungsform das Pfadnetz 511 den ersten Pfad 503, einen zweiten Pfad 518, und einen dritten Pfad 514 aufweist. Der zweite Pfad 518 ist an einem ersten Anschlusspunkt 519 mit einem ersten Ende an den ersten Pfad 503 angeschlossen. Zudem ist der zweite Pfad 518 mit einem zweiten Ende an einem zweiten Anschlusspunkt 520 des ersten Pfades 503 angeschlossen. Der dritte Pfad 514 ist ebenfalls an dem ersten Anschlusspunkt 519 mit einem ersten Ende an den ersten Pfad 503 und somit auch an den zweiten Pfad 518 angeschlossen. Zudem ist der dritte Pfad 514 mit einem zweiten Ende auch an einem zweiten Anschlusspunkt 520 des ersten Pfades 503 und des zweiten Pfades 518 angeschlossen. Der erste Pfad 503, der zweite Pfad 518 und der dritte Pfad 514 bilden somit einen ersten zusammenhängenden Teil 515 des Pfadnetzes 511.

Das Pfadnetz 511 kann von seiner Ausbildung gemäß Fig.7 zu seiner Ausbildung gemäß Fig.8 aufgrund einer Eingabe in die Steuereinheit 506 oder abhängig von Randbedingungen und/oder Betriebsbedingungen geändert worden sein. Die Änderung des Pfadnetzes 511 ist dadurch ausgeprägt, dass der zweite Pfad 518 hinzugefügt worden ist. Dadurch ist ein Teil des erste Pfades 503 abgespalten worden und zu dem dritten Pfad 514 geworden. Auch in dieser Ausführungsform sind die Daten über das erste Pfadnetz 511 mit dem ersten Pfad 503, dem zweiten Pfad 518, dem dritten Pfad 514 und den Anschlusspunkten 519, 520 im Datenspeicher 512 abgelegt. Somit hat die Steuereinheit 506 für die Planung der ersten und zweiten Fahrwege 610, 620 der Mover 200, 513 ein größeres Pfadnetz 511 im Vergleich zur Ausführungsform gemäß der Fig. 7 zur Verfügung. Der Grund für die Änderung des Pfadnetzes 511 kann in einer Betriebsbedingung wie beispielweise die Temperatur der Sektoren 501, über die der dritte Pfad 514 verläuft, liegen. Ist diese Temperatur für den weiteren Betrieb der betreffenden Sektoren 501 zu hoch, kann als Alternative der zweite Pfad 518 für die Mover 200, 513 genutzt werden, die die erste und zweite Station 521, 522 nicht anfahren müssen. So kann ein alternativer Fahrweg über den zweiten Pfad 518 verwendet werden und die Sektoren 501 über die der dritte Pfad 514 verläuft, können abkühlen. Weitere Gründe für das Hinzufügen des zweiten Pfades 514 können beispielsweise die Schaffung einer Abkürzung oder einer Parkfläche oder eines Fahrweges für ein Überholmanöver zwischen dem Mover 200 und dem zweiten Mover 513 sein.

Die Steuereinheit 506 ist ausgebildet, um nach der Festlegung des oder der ersten oder zweiten Fahrwege 610, 620 der Mover 200, 513 eine Dynamikplanung durchzuführen. Bei der Dynamikplanung wird festgelegt, welche Magnetfelderzeuger 127 auf den Sektoren 501 bestromt werden, um die Mover 200, 513 mit einer gewünschten Geschwindigkeit entlang dem ersten bzw. zweiten Fahrweg 610, 620 zu bewegen. Abhängig von verschiedenen Betriebsparametern kann die Steuereinheit 506 die Mover 200, 513 nur über den ersten Pfad 503 oder auch zusätzlich über den zweiten Pfad 518 bewegen. Dazu steuert die Steuereinheit 506 die Magnetfelderzeuger 127 der Sektoren 501 in entsprechender Weise an. Für die Festlegung, auf welchem ersten oder zweiten Fahrweg 610, 620 der erste und/oder der zweite Mover 200, 513 von der Steuereinheit 506 bewegt werden, sind entsprechende Regeln, Prioritäten und Randbedingungen im Datenspeicher 512 abgelegt.

Beispielsweise kann es abhängig von der Beladung der Mover 200, 513 ausreichen, wenn die Mover 200, 513 nur die erste, die zweite und die dritte Station 521, 522, 523 anfahren. Somit ist es sinnvoll, die Mover 200, 513 nach der dritten Station 523 über den zweiten Pfad 518 wieder zurück zur ersten Station 521 zu bewegen. Zudem kann es aufgrund der Beladung der Mover 200, 513 erforderlich sein, dass der Mover 200 und/oder der zweite Mover 513 auch zur vierten und fünften Station 524, 525 gefahren werden müssen. Bei dieser Randbedingung wird der zweite Pfad 518 für die Bewegung der Mover 200, 513 von der Steuereinheit 506 nicht verwendet. Weiterhin kann der zweite Pfad 518 von der Steuereinheit 506 verwendet werden, um beispielsweise den Mover 200 im zweiten Pfad 518 zu parken, während der zweite Mover 513 auf dem ersten Pfad 503 und/oder dem dritten Pfad 514 weiterbewegt wird. Auf diese Weise können Überholmanöver durchgeführt werden. Der auf dem zweiten Pfad 518 geparkte Mover 200 kann entsprechend nach der Vorbeifahrt des zweiten Movers 513 wieder zurück auf den ersten Pfad 503 oder den dritten Pfad 514 bewegt werden.

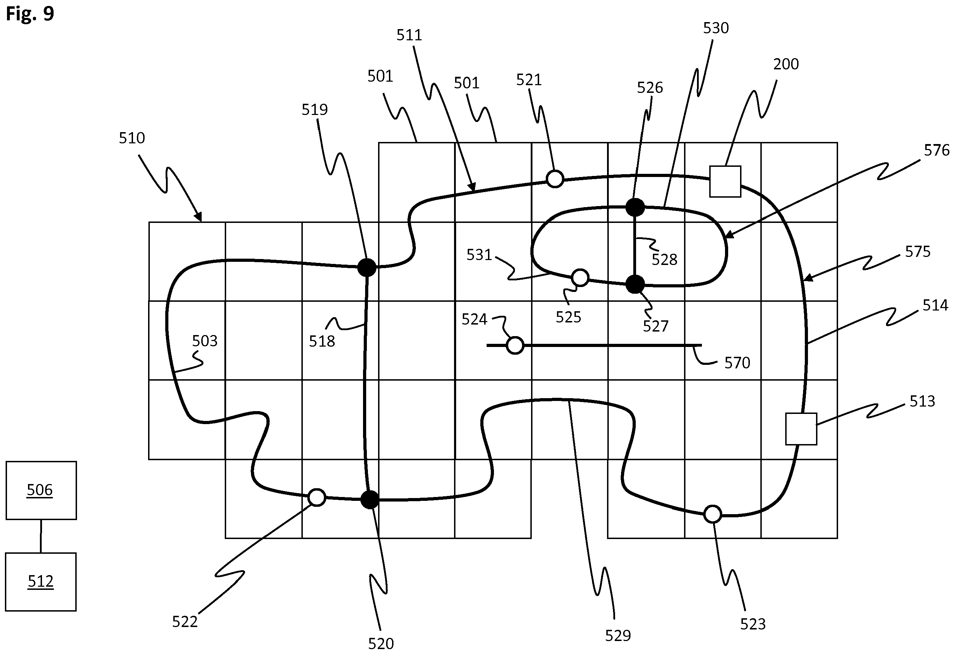

**Fig. 9** zeigt eine schematische Draufsicht auf eine weitere Anordnung von Sektoren 501, die eine Antriebsfläche 510 bilden. Bei dieser Ausführungsform ist eine äußere Randkontur der Antriebsfläche 510 abgestuft ausgebildet. Zudem ist schematisch ein Pfadnetz 511 mit unterschiedlichen Teilen dargestellt. Ein Teil des Pfadnetzes 511 besteht aus einem einzelnen, getrennten Pfad 570. Der getrennte Pfad 570 weist keinen Anschlusspunkt zu einem anderen Pfad auf und besitzt somit zwei offene Enden.

Ein weiterer Teil des Pfadnetzes wird aus dem ersten zusammenhängenden Teil 575 des Pfadnetzes 511 mit dem ersten Pfad 503, dem zweiten Pfad 518 und dem dritten Pfad 514 gebildet. Der erste Pfad 503 ist mit dem zweiten Pfad 518 und dem dritten Pfad 514 über den ersten Anschlusspunkt 519 und über den zweiten Anschlusspunkt 520 verbunden. Somit sind auch der zweite Pfad 518 und der dritten Pfad 514 über den ersten Anschlusspunkt 519 und über den zweiten Anschlusspunkt 520 miteinander verbunden.

Ein zweiter zusammenhängender Teil 576 des Pfadnetzes 511 besteht aus einem vierten Pfad 528, einem fünften Pfad 530 und dem sechsten Pfad 531. Der vierte Pfad 528, der fünfte Pfad 530 und der sechste Pfad 531 sind über einen dritten Anschlusspunkt 526 und einen vierten Anschlusspunkt 527 verbunden. Der erste zusammenhängende Teil 575 des Pfadnetzes 511, der zweite zusammenhängende Teil 576 des Pfadnetzes 511 und der getrennte Pfad 570 sind jeweils voneinander getrennt und weisen keine gemeinsamen Anschlusspunkte auf. Weiterhin ist ein Mover 200 auf dem dritten Pfad 514 dargestellt. Außerdem ist ein zweiter Mover 513 auf dem dritten Pfad 514 dargestellt. Des Weiteren befinden sich auf den verschiedenen Pfaden verschiedene erste bis fünfte Stationen. Auch bei dieser Ausführungsform sind die Daten über das Pfadnetz 511 im Datenspeicher 512 abgelegt. Wie anhand von Fig. 9 ersichtlich ist, können verschiedenste Formen des Pfadnetzes 511 für die Bewegung der Mover 200, 513 im Datenspeicher 512 festgelegt sein.

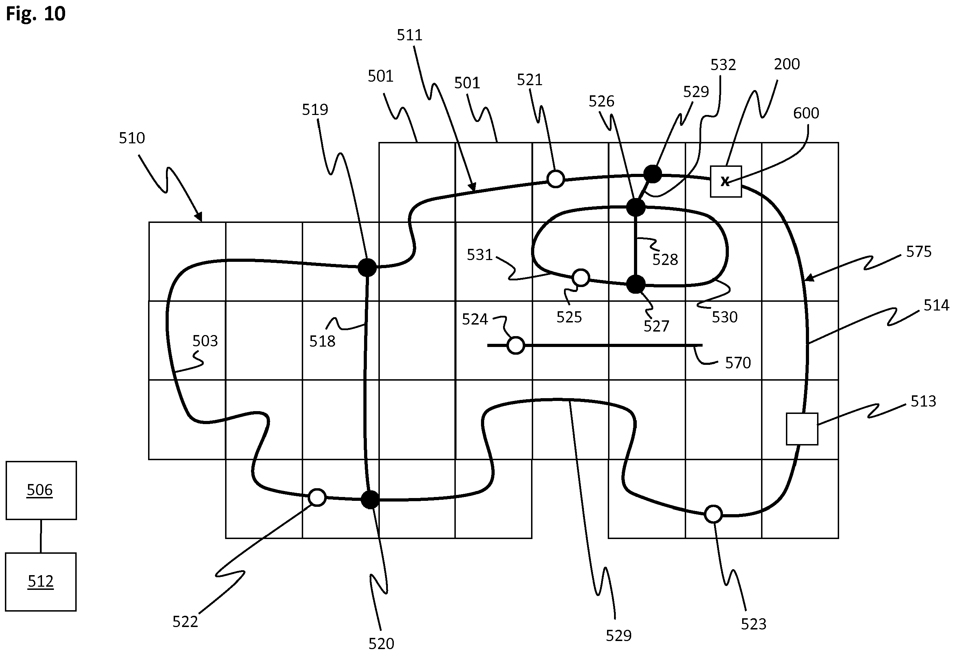

**Fig. 10** zeigt eine weitere Ausführungsform mit einem Blick auf eine Antriebsfläche 510, wobei ein Pfadnetz 511 dargestellt ist. Die Antriebsfläche 510 ist aus einer Vielzahl von Sektoren 501 aufgebaut. Das Pfadnetz 511 der Ausführung gemäß Fig. 10 unterscheidet sich von der Ausführung gemäß Fig.9 dahingehend, dass ein siebter Pfad 532 hinzugefügt worden ist. Der siebte Pfad 532 ist über einen fünften Anschlusspunkt 529 mit dem in Fig. 9 gezeigten ersten zusammenhängenden Teil 575 des Pfadnetzes 511 verbunden und über den dritten Anschlusspunkt 526 mit dem in Fig. 9 gezeigten zweiten zusammenhängenden Teil 576 des Pfadnetzes 511 verbunden. Somit sind der in Fig. 9 gezeigte erste zusammenhängende Teil 575 des Pfadnetzes 511 und der in Fig. 9 gezeigte zweite zusammenhängende Teil 576 des Pfadnetzes 511 in der Ausführungsform gemäß Fig. 10, über den siebten Pfad 532 miteinander verbunden und bilden einen gemeinsamen zusammenhängenden Teil 575 des Pfadnetzes 511. Durch die Hinzunahme des fünften Anschlusspunktes 529 wurde der dritte Pfad 514 in einen dritten Pfad 514, der sich zwischen dem zweiten Anschlusspunkt 520 und dem fünften Anschlusspunkt 529 erstreckt, und einen achten Pfad 533, der sich zwischen dem fünften Anschlusspunkt 529 und dem ersten Anschlusspunkt 519 erstreckt, aufgeteilt.

Die Informationen über das Pfadnetz 511 sind im Datenspeicher 512 abgelegt. Zudem sind auf der Antriebsfläche 510 eine erste, eine zweite, eine dritte, eine vierte und eine fünfte Station 521, 522, 523, 524, 525 schematisch in Form von Kreisen dargestellt. Die ersten bis fünften Anschlusspunkte 519, 520, 526, 527, 529 stellen gleichzeitig Kreuzungen der Pfade dar. An diesen Kreuzungen ist eine Kollision der Mover 200, 513 nach vorgegebenen Regeln und/oder Prioritäten der Mover 200, 513 zu vermeiden. Die Steuereinheit 506 plant entsprechend der Bewegung der Mover 200, 513 an den ersten bis fünften Anschlusspunkten 519, 520, 526, 527, 529.

Das Pfadnetz 511 kann von seiner Ausbildung gemäß Fig.9 zu seiner Ausbildung gemäß Fig.10 aufgrund einer Eingabe in die Steuereinheit 506 oder abhängig von Randbedingungen und/oder Betriebsbedingungen geändert worden sein. Die Änderung des Pfadnetzes 511 ist dadurch ausgeprägt, dass der siebte Pfad 532 hinzugefügt worden ist. Durch diese Änderung ist die fünfte Station 525, im Gegensatz zu der Ausführung des Pfadnetzes gemäß Fig.9 für den Mover 200 über den siebten Pfad 532 und beispielsweise über den sechsten Pfad 531 erreichbar. Ein Grund für das Hinzufügen des siebten Pfades 532 kann eine geänderte Randbedingung aufgrund der Beladung des Movers 200 sein. Ein Beispiel wäre, dass der Mover 200 an der dritten Station 523 ein Produkt geladen hat, welches als nächstes in der fünften Station 525 bearbeitet werden soll. Weitere Gründe für das Hinzufügen des siebten Pfades 532 kann die Schaffung einer Parkfläche sein, auf der ein Mover abgestellt werden kann, ohne Pfade die von anderen Movern verwendet werden, zu blockieren.

Die Steuereinheit 506 kann weiterhin beispielweise ausgebildet sein, um den Mover 200 von seiner aktuellen Position 600 aus, über den dritten Pfad 514, den achten Pfad 533, den zweiten Pfad 518 und den ersten Pfad 503 oder alternativ über den dritten Pfad 514, den achten Pfad 533 und den ersten Pfad 503 zu der zweiten Station 522 zu fahren, wenn beispielsweise die zweite Station 522 von dem Mover 200 angefahren werden soll. Abhängig von den Randbedingungen und/oder Betriebsbedingungen kann die Steuereinheit 506 somit entweder den zweiten Pfad 518 oder den zum zweiten Pfad 518 alternativen ersten Pfad 503 wählen, um den Mover 200 von der aktuellen Position 600 zu der zweiten Station 522 zu fahren. Der erste Pfad 503 und der zweite Pfad 518 führen im Wesentlichen beide in Richtung der zweiten Station 522, wobei sie wenigstens teilweise oder vollständig über verschiedene Sektoren 501 führen. Ergibt beispielsweise die Überprüfung der Temperatur der Sektoren 501, über die der erste Pfad 503 geführt ist, dass diese Sektoren 501 eine Temperatur aufweisen, die einen vorgegebenen Grenzwert überschreiten, so kann die Steuereinheit 506 für die Fahrwegplanung den zweiten Pfad 518 anstelle des ersten Pfades 503 wählen. Auf diese Weise kann eine Bestromung der Sektoren 501 des ersten Pfades 503 reduziert oder vermieden werden und somit die Verlustwärme in den Sektoren 501, die von dem Mover 200 auf dem ersten Pfad 503 genutzt werden, reduziert und damit die Temperatur der Sektoren 501 gesenkt werden.

Zudem kann abhängig von der gewählten Ausführungsform der fünfte Pfad 530als Parkbereich für nicht benötigte Mover 200, 513 von der Steuereinheit 506 verwendet werden, und der oder die nicht benötigten Mover 200, 513 auf den fünften Pfad 530 gefahren werden.

Zudem kann die Steuereinheit 506 ausgebildet sein, das Pfadnetz 511 durch eine Eingabe in die Steuereinheit 506 beispielsweise durch eine Bedienperson oder eine weitere Steuereinheit oder abhängig von Randbedingungen oder Betriebsbedingungen der Antriebsfläche 510 und/oder der Mover 200, 513 zu verändern.

Abhängig von der gewählten Ausführungsform ist ein Pfad des Pfadnetzes 511 als eindimensionaler Bewegungspfad ausgebildet. Somit kann sich an einer Pfadposition nur ein Mover 200, 513 befinden bzw. bewegt werden.

In einer weiteren Ausführungsform ist die Steuereinheit 506 ausgebildet, das Pfadnetz 511 in vorgegebenen Grenzen zu variieren. Beispielsweise können einzelne Pfadabschnitte oder Formen von Pfadabschnitten oder Pfade nach vorgegebenen Randbedingungen, die beispielsweise im Datenspeicher 512 abgelegt sind, variiert werden. Nach einer Variation des Pfadnetzes 511 überprüft die Steuereinheit 506, ob sich ein vorgegebener Parameter durch die Variation des Pfadnetzes 511 verbessert hat. Beispielsweise kann der vorgegebene Parameter eine Länge einer Wegstrecke, ein Stromverbrauch für die Bewegung der Movers 200, 513 oder eine Zeitdauer für das Abfahren von vorgegebenen Stationen sein. Ergibt die Überprüfung, dass sich durch die Änderung des Pfadnetzes 511 wenigstens einer der vorgegebenen Parameter verbessert hat, so wird die Änderung beibehalten, soweit nicht die Verschlechterung von anderen Parametern dagegen spricht. Im Datenspeicher können z.B. Grenzwerte, insbesondere prozentuale Grenzwerte für die Parameter abgelegt sein, ab denen eine Änderung des Pfadnetzes beibehalten wird. Zudem können Grenzwerte für mehrere Parameter abgelegt sein, wobei die Grenzwerte festlegen, bei welcher Änderung der Parameter eine Änderung des Pfadnetzes beibehalten wird.

Ergibt jedoch die Überprüfung, dass sich der wenigstens ein vorgegebener Parameter durch die Änderung des Pfadnetzes nicht verbessert hat, so wird entweder die Änderung des Pfadnetzes 511 rückgängig gemacht oder es wird eine weitere Änderung des Pfadnetzes 511 durchgeführt. Bei einer weiteren Änderung des Pfadnetzes 511 wird anschließend geprüft, ob sich der wenigstens ein vorgegebener Parameter verbessert hat. Ergibt die Überprüfung, dass sich der vorgegebene Parameter verbessert hat, so wird die weitere Änderung beibehalten. Ergibt jedoch die Überprüfung, dass sich der vorgegebene Parameter nicht verbessert hat, so wird entweder die weitere Änderung rückgängig gemacht oder eine zusätzliche Änderung des Pfadnetzes 511 durchgeführt.

Abhängig von der gewählten Ausführungsform kann die Variation des Pfadnetzes 511entweder im realen Betrieb oder in einer Simulation mithilfe eines Simulationsprogramms ausgeführt werden. Ergibt die Simulation, dass die Änderung des Pfadnetzes gemäß der Simulation zu einer Verbesserung des wenigstens einen vorgegebenen Parameters führt, so führt die Steuereinheit 506 die Änderung des Pfadnetzes 511im realen Betrieb durch. Ergibt jedoch die Simulation, dass die Änderung des Pfadnetzes 511 zu keiner Verbesserung des Parameters führt, so wird die Änderung des Pfadnetzes 511 im realen Betrieb nicht durchgeführt.

Abhängig von der gewählten Ausführungsform kann die Steuereinheit 506 ausgebildet sein, das wenigstens eine Pfadnetz 511 und/oder eine Änderung des Pfadnetzes 511 mithilfe eines selbstlernenden Verfahrens, insbesondere mithilfe eines Maschinenlernverfahrens, zu ermitteln. Zudem kann die Steuereinheit ein neuronales Netz aufweisen, um das Pfadnetz 511 und/oder eine Änderung des Pfadnetzes 511 zu ermitteln.

Mit dem beschriebenen Verfahren werden die Daten, die bei der Fahrwegplanung berücksichtigt werden müssen, deutlich reduziert. Somit ist eine bessere Skalierbarkeit des Systems auch für eine größere Anzahl von Movern gegeben.

### Bezugszeichenliste

- 1: Planarantriebssystem
- 8: Oberseite
- 9: Unterseite
- 10: Statormodul
- 11: Statorfläche
- 12: erste Richtung
- 14: zweite Richtung
- 15: vertikale Richtung
- 18: Anschlussleitung
- 19: Modulgehäuse
- 30: Außenkante der Statorfläche
- 100: Statoreinheit
- 104: erste Statorlage
- 105: zweite Statorlage
- 106: dritte Statorlage
- 107: vierte Statorlage
- 110: erster Statorsektor
- 112: dritter Statorsektor
- 113: zweiter Statorsektor
- 114: vierter Statorsektor
- 120: erste Statorsegmente
- 121: zweite Statorsegmente
- 125: Leiterstreifen
- 126: weitere Leiterstreifen
- 200: Mover
- 201: Magnetanordnung
- 206: erste Läuferrichtung
- 208: zweite Läuferrichtung
- 210: erste Magneteinheit
- 211: Antriebsmagnet
- 220: zweite Magneteinheit
- 221: weiterer Antriebsmagnet
- 230: dritte Magneteinheit
- 240: vierte Magneteinheit
- 501: Sektor
- 502: erster Mover
- 503: erster Pfad
- 506: Steuereinheit
- 509: Objekt
- 510: Antriebsfläche
- 511: erstes Pfadnetz
- 512: Datenspeicher
- 513: zweiter Mover
- 514: dritter Pfad
- 517: zweites Pfadnetz
- 518: zweiter Pfad
- 519: erster Anschlusspunkt
- 520: zweiter Anschlusspunkt
- 521: erste Station
- 522: zweite Station
- 523: dritte Station
- 524: vierte Station
- 525: fünfte Station
- 526: dritter Anschlusspunkt
- 527: vierter Anschlusspunkt
- 528: vierter Pfad
- 529: fünfter Anschlusspunkt
- 530: fünfter Pfad
- 531: erster Verbindungweg
- 532: zweiter Verbindungsweg
- 533: Pfadabschnitt
- 560: Sensor
- 670: Pfad
- 575: erstes zusammenhängendes Teil
- 576: zweites zusammenhängendes Teil
- 600: aktuelle Position
- 605: Ziel
- 620: Fahrweg

## Patentansprüche

1. Vorrichtung zum Antreiben von wenigstens einem Mover (200) auf einer Antriebsfläche (510), wobei der Mover (200) wenigstens einen zweiten Magnetfelderzeuger (250) aufweist, wobei die Vorrichtung mehrere plattenförmige Sektoren (501) aufweist, wobei die Sektoren (501) Magnetfelderzeuger (127) aufweisen, wobei die Sektoren (501) die Antriebsfläche (510) bilden, wobei die Sektoren (501) mit einer Steuereinheit (506) verbunden sind, wobei die Steuereinheit (506) ausgebildet ist, um über eine entsprechende Steuerung einer Stromversorgung der Magnetfelderzeuger (127) Magnetfelder in der Weise zu erzeugen, dass der Mover (200) wenigstens in einer Richtung über die Antriebsfläche (510) bewegbar ist, wobei wenigstens ein virtuelles Pfadnetz (511) für die Antriebsfläche (510) vorgesehen ist, wobei die Steuereinheit (506) ausgebildet ist, um einen Fahrweg (610) für den Mover (200) auf dem Pfadnetz (511) zu ermitteln, wobei die Steuereinheit (506) ausgebildet ist, um die Magnetfelderzeuger (127) der Sektoren (501) in der Weise mit Strom anzusteuern, dass der Mover (200) entlang des ermittelten Fahrweges (610) innerhalb des Pfadnetzes (511) über die Antriebsfläche (510) bewegbar ist,
**dadurch gekennzeichnet, dass**
das Pfadnetz (511) wenigstens in einem zusammenhängenden Teil (575, 576) des Pfadnetzes (511) zumindest zwei alternative Pfade (503, 518, 514, 528, 530, 531, 532, 533) aufweist, über die der Mover (200, 513) von seiner aktuellen Position (600) aus zu einem Ziel (605) bewegbar ist, wobei die Steuereinheit (506) ausgebildet ist, den Fahrweg (610, 620) für den Mover (200, 513) in Abhängigkeit von Betriebsbedingungen zumindest eines Sektors (501) und/oder zumindest des Movers (200, 513) derart zu ermitteln, dass einer der beiden alternativen Pfade (503, 518, 514, 528, 530, 531, 532, 533) als Fahrweg (610, 620) genutzt wird.

2. Vorrichtung nach Anspruch 1, wobei die Steuereinheit (506) ausgebildet ist, um einen weiteren Fahrweg (620) für einen weiteren Mover (513) auf dem Pfadnetz (511) zu ermitteln, wobei die Steuereinheit (506) ausgebildet ist, um die Magnetfelderzeuger (127) der Sektoren (501) in der Weise mit Strom anzusteuern, dass der weitere Mover (513) entlang des ermittelten weiteren Fahrweges (620) innerhalb des Pfadnetzes (511) über die Antriebsfläche (510) bewegbar ist, und wobei die Steuereinheit (506) bei der Ermittlung der zwei Fahrwege (610, 620) eine Kollision der Mover (200, 513) vermeidet.

3. Vorrichtung nach Anspruch 2, wobei ein zusammenhängender Teil (575, 576) des Pfadnetzes (511) eine Summe von Pfaden (503, 518, 514, 528, 530, 531, 532, 533) aufweist, die über Anschlusspunkte (519, 520, 526, 527, 529) miteinander verbunden sind und
wobei Anschlusspunkte (519, 520, 526, 527, 529) Punkte sind, an denen mindestens zwei Pfade (503, 518, 514, 528, 530, 531, 532, 533) aufeinandertreffen, und wobei die Steuereinheit (506) ausgebildet ist, anhand von vorgegebenen Regeln und/oder Prioritäten der Mover (200, 513) eine Kollision der Mover (200, 513) insbesondere an den Anschlusspunkten (519, 520, 526, 527, 529) zu vermeiden.

4. Vorrichtung nach einem der vorhergehenden Ansprüche, wobei das Pfadnetz (511) durch eine Eingabe in die Steuereinheit (506) oder abhängig von Randbedingungen und/oder Betriebsbedingungen zumindest eines Sektors (501) und/oder zumindest eines Movers (200, 513) derart veränderbar ist, dass wenigstens ein Pfad (503, 518, 514, 528, 530, 531, 532, 533) geändert, dem Pfadnetz (511) hinzugefügt oder aus dem Pfadnetz (511) entfernt wird.

5. Vorrichtung nach einem der vorhergehenden Ansprüche, wobei die Steuereinheit (506) ausgebildet ist, das Pfadnetz (511) in vorgegebenen Grenzen zu variieren, wobei die Steuereinheit (506) nach der Variation des Pfadnetzes (511) anhand wenigstens eines vorgegebenen Parameters überprüft, ob die Änderung des Pfadnetzes (511) eine Verbesserung des Parameters gebracht hat, wobei die Steuereinheit (506) die Änderung des Pfadnetzes (511) beibehält, wenn die Änderung des Pfadnetzes (511) eine Verbesserung des Parameters gebracht hat, und wobei die Steuereinheit (506) die Änderung rückgängig macht oder eine weitere Änderung des Pfadnetzes (511) durchführt, wenn die Änderung keine Verbesserung des Parameters gebracht hat.

6. Vorrichtung nach Anspruch 5, wobei die Steuereinheit (506) die Änderung des Pfadnetzes (511) und die Überprüfung der Verbesserung des Parameters in einem Simulationsprogramm ausführt, und wobei die Steuereinheit (506) die Änderung des Pfadnetzes (511) im realen Betrieb ausführt, wenn sich in der Simulation durch die Änderung des Pfadnetzes (511) eine Verbesserung des Parameters ergeben hat.

7. Vorrichtung nach einem der vorhergehenden Ansprüche, wobei die Steuereinheit (506) ausgebildet ist, um das Pfadnetz (511) und/oder eine Änderung des Pfadnetzes (511) mithilfe eines selbstlernenden Verfahrens, insbesondere mit einem Maschinenlernverfahren und/oder einem neuronalen Netz zu ermitteln.

8. Verfahren zum Ermitteln eines Fahrweges (610) für wenigstens einen Mover (200) auf einer Antriebsfläche (510), wobei der Mover (200) wenigstens einen zweiten Magnetfelderzeuger (250) aufweist, wobei die Antriebsfläche (510) mehrere plattenförmige Sektoren (501) aufweist, wobei die Sektoren (501) Magnetfelderzeuger (127) aufweisen, wobei wenigstens ein virtuelles Pfadnetz (511) für die Antriebsfläche (510) vorgesehen ist, wobei ein Fahrweg (610) für den Mover (200) auf dem Pfadnetz (511) ermittelt wird, **dadurch gekennzeichnet, dass**
das Pfadnetz (511) wenigstens in einem zusammenhängenden Teil (575, 576) des Pfadnetzes (511) zumindest zwei alternative Pfade (503, 518, 514, 528, 530, 531, 532, 533) aufweist, über die der Mover (200, 513) von seiner aktuellen Position (600) aus zu einem Ziel (605) bewegbar ist, wobei der Fahrweg (610, 620) für den Mover (200, 513) in Abhängigkeit von Betriebsbedingungen zumindest eines Sektors (501) und/oder zumindest des Movers (200, 513) derart ermittelt wird, dass einer der beiden alternativen Pfade (503, 518, 514, 528, 530, 531, 532, 533) als Fahrweg (610, 620) genutzt wird.

9. Verfahren nach Anspruch 8, wobei abhängig vom ermittelten Fahrweg (610) die Magnetfelderzeuger (127) der Sektoren (501) in der Weise mit Strom versorgt werden, dass der Mover (200) entlang des ermittelten Fahrweges (610) innerhalb des Pfadnetzes (511) über die Antriebsfläche (510) bewegt wird.

10. Verfahren nach Anspruch 8 oder 9, wobei ein weiterer Fahrweg (620) für einen weiteren Mover (513) auf dem Pfadnetz (511) nach vorgegebenen Randbedingungen ermittelt wird, wobei die Magnetfelderzeuger (127) der Sektoren (501) in der Weise mit Strom versorgt werden, dass der weitere Mover (513) entlang des ermittelten weiteren Fahrweges (620) innerhalb des Pfadnetzes (511) über die Antriebsfläche (510) bewegt wird, und wobei bei der Ermittlung der zwei Fahrwege (610, 620) eine Kollision der Mover (200, 513) vermieden wird.

11. Verfahren nach Anspruch 10, wobei ein zusammenhängender Teil (575, 576) des Pfadnetzes (511) eine Summe von Pfaden (503, 518, 514, 528, 530, 531, 532, 533) aufweist, die über Anschlusspunkte (519, 520, 526, 527, 529) miteinander verbunden sind und
wobei Anschlusspunkte (519, 520, 526, 527, 529) Punkte sind, an denen mindestens zwei Pfade (503, 518, 514, 528, 530, 531, 532, 533) aufeinandertreffen, und wobei eine Kollision der Mover (200, 513) insbesondere an den Anschlusspunkten (519, 520, 526, 527, 529) anhand von vorgegebenen Regeln und/oder Prioritäten der Mover (200, 513) vermieden werden.

12. Verfahren nach einem der Ansprüche 8 bis 11, wobei das Pfadnetz (511) durch eine Eingabe in die Steuereinheit (506) oder abhängig von Randbedingungen und/oder Betriebsbedingungen zumindest eines Sektors (501) und/oder zumindest eines Movers (200, 513) derart verändert wird, dass wenigstens ein Pfad (503, 518, 514, 528, 530, 531, 532, 533) geändert, dem Pfadnetz (511) hinzugefügt oder aus dem Pfadnetz (511) entfernt wird.

13. Verfahren nach einem der Ansprüche 9 bis 12, wobei das Pfadnetz (511) in vorgegebenen Grenzen variiert wird, wobei nach der Variation des Pfadnetzes (511) anhand wenigstens eines vorgegebenen Parameters überprüft, ob die Änderung des Pfadnetzes (511) eine Verbesserung des Parameters gebracht hat, wobei die Änderung des Pfadnetzes (511) beibehalten wird, wenn die Änderung des Pfadnetzes (511) eine Verbesserung des Parameters gebracht hat, und wobei die Änderung rückgängig gemacht oder eine weitere Änderung des Pfadnetzes (511) durchgeführt wird, wenn die Änderung keine Verbesserung des Parameters gebracht hat.

14. Verfahren nach Anspruch 13, wobei die Änderung des Pfadnetzes (511) und die Überprüfung der Verbesserung des Parameters in einem Simulationsprogramm ausgeführt werden, und wobei die Steuereinheit (506) die Änderung des Pfadnetzes (511) im realen Betrieb ausführt, wenn sich in der Simulation durch die Änderung des Pfadnetzes (511) eine Verbesserung des Parameters ergeben hat.

15. Verfahren nach einem der Ansprüche 8 bis 14, wobei das Pfadnetz (511) und/oder eine Änderung des Pfadnetzes (511) mithilfe eines selbstlernenden Verfahrens, insbesondere mit einem Maschinenlernverfahren und/oder einem neuronalen Netz ermittelt werden.

## Claims

1. Device for driving at least one mover (200) on a driving surface (510), wherein the mover (200) has at least one second magnetic field generator (250), wherein the device has a plurality of plate-like sectors (501), wherein the sectors (501) have magnetic field generators (127), wherein the sectors (501) form the driving surface (510), wherein the sectors (501) are connected to a control unit (506), wherein the control unit (506) is designed so as, through appropriate control of a supply of electric power to the magnetic field generators (127), to generate magnetic fields in such a manner that the mover (200) is movable at least in one direction over the driving surface (510), wherein at least one virtual path network (511) is provided for the driving surface (510), wherein the control unit (506) is designed to ascertain a route (610) for the mover (200) on the path network (511), wherein the control unit (506) is designed to actuate the magnetic field generators (127) of the sectors (501) using electric power in such a manner that the mover (200) is movable over the driving surface (510) along the ascertained route (610) within the path network (511),
**characterized in that**
the path network (511) has at least two alternative paths (503, 518, 514, 528, 530, 531, 532, 533) in a continuous part (575, 576) of the path network (511), over which alternative paths the mover (200, 513) is movable from its current position (600) to a destination (605), wherein the control unit (506) is designed to ascertain the route (610, 620) for the mover (200, 513) on the basis of operating conditions of at least one sector (501) and/or at least of the mover (200, 513) such that one of the two alternative paths (503, 518, 514, 528, 530, 531, 532, 533) is used as the route (610, 620).

2. Device according to Claim 1, wherein the control unit (506) is designed to ascertain a further route (620) for a further mover (513) on the path network (511), wherein the control unit (506) is designed to actuate the magnetic field generators (127) of the sectors (501) using electric power in such a manner that the further mover (513) is movable over the driving surface (510) along the ascertained further route (620) within the path network (511), and wherein the control unit (506) avoids a collision of the movers (200, 513) when ascertaining the two routes (610, 620).

3. Device according to Claim 2, wherein a continuous part (575, 576) of the path network (511) has a total amount of paths (503, 518, 514, 528, 530, 531, 532, 533), which are connected to one another by way of connection points (519, 520, 526, 527, 529) and
wherein connection points (519, 520, 526, 527, 529) are points at which at least two paths (503, 518, 514, 528, 530, 531, 532, 533) meet, and wherein the control unit (506) is designed to avoid a collision of the movers (200, 513), in particular at the connection points (519, 520, 526, 527, 529), by using predetermined rules and/or priorities of the movers (200, 513).

4. Device according to one of the preceding claims, wherein the path network (511) can be changed by means of an input into the control unit (506) or on the basis of constraints and/or operating conditions of at least one sector (501) and/or at least one mover (200, 513) in such a manner that at least one path (503, 518, 514, 528, 530, 531, 532, 533) is changed, added to the path network (511) or removed from the path network (511).

5. Device according to one of the preceding claims, wherein the control unit (506) is designed to vary the path network (511) within predetermined limits, wherein, after the path network (511) has been varied, the control unit (506) checks, by using at least one predetermined parameter, whether the change to the path network (511) has brought about an improvement in the parameter, wherein the control unit (506) retains the change to the path network (511) if the change to the path network (511) has brought about an improvement in the parameter, and wherein the control unit (506) reverses the change or makes a further change to the path network (511) if the change has not brought about an improvement in the parameter.

6. Device according to Claim 5, wherein the control unit (506) makes the change to the path network (511) and checks the improvement in the parameter in a simulation program, and wherein the control unit (506) makes the change to the path network (511) during actual operation if the change to the path network (511) has brought about an improvement in the parameter in the simulation.

7. Device according to one of the preceding claims, wherein the control unit (506) is designed to ascertain the path network (511) and/or a change to the path network (511) by means of a self-learning method, in particular using a machine learning method and/or a neural network.

8. Method for ascertaining a route (610) for at least one mover (200) on a driving surface (510), wherein the mover (200) has at least one second magnetic field generator (250), wherein the driving surface (510) has a plurality of plate-like sectors (501), wherein the sectors (501) have magnetic field generators (127), wherein at least one virtual path network (511) is provided for the driving surface (510), wherein a route (610) for the mover (200) is ascertained on the path network (511),
**characterized in that**
the path network (511) has at least two alternative paths (503, 518, 514, 528, 530, 531, 532, 533) at least in a continuous part (575, 576) of the path network (511), over which alternative paths the mover (200, 513) is movable from its current position (600) to a destination (605), wherein the route (610, 620) for the mover (200, 513) is ascertained on the basis of operating conditions of at least one sector (501) and/or at least of the mover (200, 513) such that one of the two alternative paths (503, 518, 514, 528, 530, 531, 532, 533) is used as the route (610, 620).

9. Method according to Claim 8, wherein, on the basis of the ascertained route (610), the magnetic field generators (127) of the sectors (510) are supplied with electric power in such a manner that the mover (200) is moved over the driving surface (510) along the ascertained route (610) within the path network (511).

10. Method according to Claim 8 or 9, wherein a further route (620) for a further mover (513) is ascertained on the path network (511) according to predetermined constraints, wherein the magnetic field generators (127) of the sectors (501) are supplied with electric power in such a manner that the further mover (513) is moved over the driving surface (510) along the ascertained further route (620) within the path network (511), and wherein a collision of the movers (200, 513) is avoided when ascertaining the two routes (610, 620).

11. Method according to Claim 10, wherein a continuous part (575, 576) of the path network (511) has a total amount of paths (503, 518, 514, 528, 530, 531, 532, 533), which are connected to one another by way of connection points (519, 520, 526, 527, 529) and
wherein connection points (519, 520, 526, 527, 529) are points at which at least two paths (503, 518, 514, 528, 530, 531, 532, 533) meet, and wherein a collision of the movers (200, 513), in particular at the connection points (519, 520, 526, 527, 529), is avoided by using predetermined rules and/or priorities of the movers (200, 513) .

12. Method according to one of Claims 8 to 11, wherein the path network (511) is changed by means of an input into the control unit (506) or on the basis of constraints and/or operating conditions of at least one sector (501) and/or at least one mover (200, 513) in such a manner that at least one path (503, 518, 514, 528, 530, 531, 532, 533) is changed, added to the path network (511) or removed from the path network (511).

13. Method according to one of Claims 9 to 12, wherein the path network (511) is varied within predetermined limits, wherein, after the path network (511) has been varied, at least one predetermined parameter is used to check whether the change to the path network (511) has brought about an improvement in the parameter, wherein the change to the path network (511) is retained if the change to the path network (511) has brought about an improvement in the parameter, and wherein the change is reversed or a further change to the path network (511) is made if the change has not brought about an improvement in the parameter.

14. Method according to Claim 13, wherein the change to the path network (511) and the checking of the improvement in the parameter are carried out in a simulation program, and wherein the control unit (506) makes the change to the path network (511) during actual operation if the change to the path network (511) has brought about an improvement in the parameter in the simulation.

15. Method according to one of Claims 8 to 14, wherein the path network (511) and/or a change to the path network (511) are ascertained by means of a self-learning method, in particular using a machine learning method and/or a neural network.

## Revendications

1. Dispositif d'entraînement d'au moins un élément mobile (200) sur une surface d'entraînement (510), l'élément mobile (200) comportant au moins un deuxième générateur de champ magnétique (250), le dispositif comportant une pluralité de secteurs (501) en forme de plaque, les secteurs (501) comportant des générateurs de champ magnétique (127), les secteurs (501) formant la surface d'entraînement (510), les secteurs (501) étant reliés à une unité de commande (506), l'unité de commande (506) étant conçue pour générer des champs magnétiques par le biais d'une commande correspondante d'une alimentation en courant des générateurs de champ magnétique (127) de manière à pouvoir déplacer l'élément mobile (200) sur la surface d'entraînement (510) au moins dans une direction, au moins un réseau de chemins virtuels (511) étant prévu pour la surface d'entraînement (510), l'unité de commande (506) étant conçue pour déterminer un itinéraire (610) de l'élément mobile (200) sur le réseau de chemins (511), l'unité de commande (506) étant conçue pour exciter les générateurs de champ magnétique (127) des secteurs (501) avec un courant de manière à pouvoir déplacer l'élément mobile (200) sur la surface d'entraînement (510) le long de l'itinéraire déterminé (610) à l'intérieur du réseau de chemins (511),
**caractérisé en ce que**
le réseau de chemins (511) comporte, dans au moins une partie contiguë (575, 576) du réseau de chemins (511), au moins deux chemins alternatifs (503, 518, 514, 528, 530, 531, 532, 533) par lesquels l'élément mobile (200, 513) peut être déplacé de sa position actuelle (600) vers une destination (605), l'unité de commande (506) étant conçue pour déterminer l'itinéraire (610, 620) de l'élément mobile (200, 513) en fonction de conditions de fonctionnement d'au moins un secteur (501) et/ou au moins de l'élément mobile (200, 513) de manière à utiliser l'un des deux chemins alternatifs (503, 518, 514, 528, 530, 531, 532, 533) comme itinéraire (610, 620) .

2. Dispositif selon la revendication 1, l'unité de commande (506) étant conçue pour déterminer un autre itinéraire (620) d'un autre élément mobile (513) sur le réseau de chemins (511), l'unité de commande (506) étant conçue pour exciter les générateurs de champ magnétique (127) des secteurs (501) avec un courant de manière à pouvoir déplacer l'autre élément mobile (513) sur la surface d'entraînement (510) le long de l'autre itinéraire déterminé (620) à l'intérieur du réseau de chemins (511), et l'unité de commande (506) évitant une collision des éléments mobiles (200, 513) lors de la détermination des deux itinéraires (610, 620).

3. Dispositif selon la revendication 2, une partie contigüe (575, 576) du réseau de chemins (511) comportant une somme de chemins (503, 518, 514, 528, 530, 531, 532, 533) qui sont reliés entre eux par des points de raccordements (519, 520, 526, 527, 529) et les points de raccordement (519, 520, 526, 527, 529) étant des points où au moins deux chemins (503, 518, 514, 528, 530, 531, 532, 533) se rencontrent, et l'unité de commande (506) étant conçue pour éviter une collision des éléments mobiles (200, 513), en particulier aux points de raccordement (519, 520, 526, 527, 529), sur la base de règles et/ou priorités spécifiées des éléments mobiles (200, 513).

4. Dispositif selon l'une des revendications précédentes, le réseau de chemins (511) pouvant être modifié par une entrée dans l'unité de commande (506) ou en fonction des conditions limites et/ou de conditions de fonctionnement d'au moins un secteur (501) et/ou d'au moins un élément mobile (200, 513) de manière à modifier au moins un itinéraire (503, 518, 514, 528, 530, 531, 532, 533), à l'ajouter au réseau de chemins (511) ou à le retirer du réseau de chemins (511) .

5. Dispositif selon l'une des revendications précédentes, l'unité de commande (506) étant conçue pour faire varier le réseau de chemins (511) dans des limites spécifiées, après la variation du réseau de chemins (511), l'unité de commande (506) utilise au moins un paramètre spécifié pour vérifier si la modification du réseau de chemins (511) a entraîné une amélioration du paramètre, l'unité de commande (506) conservant la modification du réseau de chemins (511) si la modification du réseau de chemins (511) a entraîné une amélioration du paramètre, et l'unité de commande (506) annulant la modification ou effectuant une autre modification du réseau de chemins (511) si la modification n'a apporté aucune amélioration au paramètre.

6. Dispositif selon la revendication 5, l'unité de commande (506) effectuant la modification du réseau de chemins (511) et la vérification de l'amélioration du paramètre dans un programme de simulation, et l'unité de commande (506) modifiant le réseau de chemins (511) en fonctionnement réel si une amélioration du paramètre a résulté de la modification du réseau de chemins (511) dans la simulation.

7. Dispositif selon l'une des revendications précédentes, l'unité de commande (506) étant conçue pour déterminer le réseau de chemins (511) et/ou une modification du réseau de chemins (511) à l'aide d'un procédé d'auto-apprentissage, en particulier à l'aide d'un procédé d'apprentissage automatique et/ou d'un réseau neuronal.

8. Procédé de détermination d'un itinéraire (610) d'au moins un élément mobile (200) sur une surface d'entraînement (510), l'élément mobile (200) comportant au moins un deuxième générateur de champ magnétique (250), la surface d'entraînement (510) comportant une pluralité de secteurs (501) en forme de plaque, les secteurs (501) comportant des générateurs de champ magnétique (127), au moins un réseau de chemins virtuels (511) étant prévu pour la surface d'entraînement (510), un itinéraire (610) de l'élément mobile (200) sur le réseau de chemins (511) étant déterminé,
**caractérisé en ce que**
le réseau de chemins (511) comporte dans au moins une partie contiguë (575, 576) du réseau de chemins (511), au moins deux chemins alternatifs (503, 518, 514, 528, 530, 531, 532, 533) par lesquels l'élément mobile (200, 513) peut être déplacé de sa position actuelle (600) vers une destination (605), l'itinéraire (610, 620) de l'élément mobile (200, 513) étant déterminé en fonction de conditions de fonctionnement d'au moins un secteur (501) et/ou au moins de l'élément mobile (200, 513) de manière à utiliser l'un des deux chemins alternatifs (503, 518, 514, 528, 530, 531, 532, 533) comme itinéraire (610, 620).

9. Procédé selon la revendication 8, les générateurs de champ magnétique (127) des secteurs (501) étant alimentés en courant en fonction de l'itinéraire déterminé (610) de manière à déplacer l'élément mobile (200) sur la surface d'entraînement (510) le long du premier itinéraire déterminé (610) à l'intérieur du réseau de chemins (511).

10. Procédé selon la revendication 8 ou 9, un autre itinéraire (620) d'un autre élément mobile (513) sur le réseau de chemins (511) étant déterminé selon des conditions limites spécifiées, les générateurs de champ magnétique (127) des secteurs (501) étant alimentés en courant de manière à déplacer l'autre élément mobile (513) sur la surface d'entraînement (510) le long de l'autre itinéraire déterminé (620) à l'intérieur du réseau de chemins (511), et une collision des éléments mobiles (200, 513) étant évitée lors de la détermination des deux itinéraires (610, 620) .

11. Procédé selon la revendication 10, une partie contigüe (575, 576) du réseau de chemins (511) comportant une somme de chemins (503, 518, 514, 528, 530, 531, 532, 533) qui sont reliés entre eux par des points de raccordement (519, 520, 526, 527, 529) et les points de raccordement (519, 520, 526, 527, 529) étant des points où au moins deux chemins (503, 518, 514, 528, 530, 531, 532, 533) se rencontrent, et une collision des éléments mobiles (200, 513), en particulier aux points de raccordements (519, 520, 526, 527, 529), étant évitée sur la base de règles et/ou de priorités spécifiées des éléments mobiles (200, 513).

12. Procédé selon l'une des revendications 8 à 11, le réseau de chemins (511) étant modifié par une entrée dans l'unité de commande (506) ou en fonction de conditions limites et/ou de conditions de fonctionnement d'au moins un secteur (501) et/ou d'au moins un élément mobile (200, 513) de manière à modifier au moins un chemin (503, 518, 514, 528, 530, 531, 532, 533), à l'ajouter au réseau de chemins (511) ou à le retirer du réseau de chemins (511).

13. Procédé selon l'une des revendications 9 à 12, le réseau de chemins (511) variant dans des limites spécifiées, après la variation du réseau de chemins (511) au moins un paramètre spécifié étant utilisé pour vérifier si la modification du réseau de chemins (511) a entraîné une amélioration du paramètre, la modification du réseau de chemins (511) étant conservée si la modification du réseau de chemins (511) a entraîné une amélioration du paramètre, et la modification étant annulée ou une autre modification du réseau de chemins (511) étant effectuée si la modification n'a pas entraîné d'amélioration du paramètre.

14. Procédé selon la revendication 13, la modification du réseau de chemins (511) et la vérification de l'amélioration du paramètre étant effectuées dans un programme de simulation, et l'unité de commande (506) modifiant le réseau de chemins (511) en fonctionnement réel si une amélioration du paramètre a résulté de la modification du réseau de chemins (511) dans la simulation.

15. Procédé selon l'une des revendications 8 à 14, le réseau de chemins (511) et/ou une modification du réseau de chemins (511) étant déterminés à l'aide d'un procédé d'auto-apprentissage, en particulier à l'aide d'un procédé d'apprentissage automatique et/ou d'un réseau neuronal.
